(19)

Europäisches Patentamt

European Patent Office

Office européen des brevets

(11) **EP 4 535 863 A1**

(12) **EUROPEAN PATENT APPLICATION**
published in accordance with Art. 153(4) EPC

(43) Date of publication:
**09.04.2025   Bulletin 2025/15**

(21) Application number: **23815005.6**

(22) Date of filing: **22.05.2023**

(51) International Patent Classification (IPC):
***H04W 36/00*** (2009.01)

(52) Cooperative Patent Classification (CPC):
**H04W 36/00; H04W 56/00**

(86) International application number:
**PCT/CN2023/095602**

(87) International publication number:
**WO 2023/231821 (07.12.2023 Gazette 2023/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.05.2022   CN 202210600921**
             **17.03.2023   PCT/CN2023/082253**

(71) Applicant: **Datang Mobile Communications Equipment Co., Ltd.**
**Beijing 100085 (CN)**

(72) Inventors:
• **LUO, Yajuan**
  **Beijing 100085 (CN)**
• **LI, Hui**
  **Beijing 100085 (CN)**
• **GAO, Qiubin**
  **Beijing 100085 (CN)**
• **SU, Xin**
  **Beijing 100085 (CN)**

(74) Representative: **Studio Torta S.p.A.**
**Via Viotti, 9**
**10121 Torino (IT)**

(54) **UPLINK SYNCHRONIZATION METHOD AND APPARATUS, AND RELATED DEVICE THEREOF**

(57)     Disclosed are an uplink synchronization method and apparatus, and a related device thereof. The uplink synchronization method comprises: sending an uplink reference signal to a network device of at least one candidate cell, wherein the uplink reference signal is used for the network device of the at least one candidate cell to determine timing advance (TA) information; receiving TA indication information sent by a network device of a serving cell where a terminal device is located, wherein the TA indication information at least comprises TA information of a target cell, to which the terminal device is to be switched, in the at least one candidate cell; and indicating, on the basis of the network device of the serving cell, to switch the terminal device to the target cell, and performing uplink synchronization according to the TA information of the target cell.

```
┌──────────────────────────────────────────────────────────────┐
│ sending an uplink reference signal to a network device of at   │ ─── 401
│ least one candidate cell                                        │
└──────────────────────────────────────────────────────────────┘
                              │
                              ▼
┌──────────────────────────────────────────────────────────────┐
│ receiving TA indication information sent by the network device │ ─── 402
│ of the serving cell where the terminal device is located       │
└──────────────────────────────────────────────────────────────┘
                              │
                              ▼
┌──────────────────────────────────────────────────────────────┐
│ performing uplink synchronization according to the TA          │ ─── 403
│ information of the target cell, based on the network device of  │
│ the serving cell instructing the terminal device to switch to   │
│ the target cell                                                 │
└──────────────────────────────────────────────────────────────┘
```

Figure 4

EP 4 535 863 A1

# Description

## CROSS-REFERENCE TO RELATED APPLICATIONS

This application claims priorities to Chinese Patent Application No. 2022106009216 filed on May 30, 2022 with the China National Intellectual Property Administration and International Application No. PCT/CN2023/082253 filed on March 17, 2023 with the World Intellectual Property Organization, the entire contents of which are incorporated herein by reference.

## TECHNICAL FIELD

The present disclosure generally relates to the field of wireless communication technology, and more particularly, to an uplink synchronization method, apparatus, and related device thereof.

## BACKGROUND

In the related art, during a cell switching process, a terminal device first switches from a serving cell to a target cell, then performs uplink access in the target cell to obtain Timing Advance (TA) information, and performs uplink synchronization according to the TA information indicated by a network device.

However, the above approach of obtaining the TA information after cell-to-cell switching may result in the terminal device being unable to perform uplink synchronization timely due to a time period required to be taken up by TA information acquisition.

## SUMMARY

The disclosed embodiments provides an uplink synchronization method, apparatus, and related device.

According to an aspect of embodiments of the present disclosure, an uplink synchronization method is provided. The uplink synchronization method is performed by a terminal device and includes: sending an uplink reference signal to a network device of at least one candidate cell, wherein the uplink reference signal is configured by a network device of a serving cell where the terminal device is located, and is used to determine timing advance (TA) information by the network device of the at least one candidate cell; receiving TA indication information sent by the network device of the serving cell where the terminal device is located, wherein the TA indication information sent by the network device of the serving cell at least includes: TA information of a target cell to be switched to by the terminal device among the at least one candidate cell; and performing uplink synchronization according to the TA information of the target cell, based on the network device of the serving cell instructing the terminal device to switch to the target cell.

In some embodiments, the uplink reference signal includes at least one of: a preamble signal; a sounding reference signal; a demodulation reference signal; and, an uplink signal transmitted over the physical uplink control channel (PUCCH).

In some embodiments, the receiving TA indication information sent by the network device of the serving cell where the terminal device is located includes: receiving a first switching instruction sent by the network device of the serving cell where the terminal device is located, wherein the first switching instruction is used to instruct the terminal device to switch to the target cell among the at least one candidate cell, the first switching instruction carries the TA indication information that includes cell indication information of the target cell and the TA information of the target cell.

In some embodiments, the receiving TA indication information sent by the network device of the serving cell where the terminal device is located includes: receiving a first instruction message sent by the network device of the serving cell where the terminal device is located, wherein the first instruction message is used to instruct the terminal device to store or update the TA information of the at least one candidate cell; the first instruction message carries TA indication information that includes cell indication information of the at least one candidate cell and the TA information of the at least one candidate cell.

In some embodiments, the receiving TA indication information sent by the network device of the serving cell where the terminal device is located includes: receiving a random access message sent by the network device of the serving cell where the terminal device is located, wherein the random access message is sent from the network device of the at least one candidate cell to the network device of the serving cell, and carries the TA indication information, wherein the TA indication information includes cell indication information of the at least one candidate cell and the TA information of the at least one candidate cell.

In some embodiments, the cell indication information includes at least one of: an identity document (ID); a transmission configuration indicator (TCI) status associated with the cell; a control resource pool index associated with the cell; an uplink channel associated with the cell; and a cell index.

In some embodiments, the TA information includes a TA value or a TA group.

In some embodiments, the first instruction message is a MAC Control Element (MAC-CE) message or a Downlink Control Information (DCI) message.

In some embodiments, after receiving a first instruction message sent by the network device of the serving cell where the terminal device is located, the uplink synchronization method further includes: receiving a second switching instruction sent by the network device of the serving cell where the terminal device is located, wherein the second switching instruction is used to instruct the terminal device to switch to the target cell, and the second switching instruction carries cell indication information of the target cell.

In some embodiments, the receiving a first instruction message sent by the network device of the serving cell includes: receiving the first instruction message periodically sent by the network device of the serving cell; wherein the first instruction message sent periodically is generated based on the TA information periodically determined by the network device of the at least one candidate cell; the uplink synchronization method further includes: periodically updating the TA information of the at least one candidate cell based on the first instruction message received periodically.

In some embodiments, the uplink synchronization method further includes: receiving a second instruction message sent by the network device of the serving cell, wherein the second instruction message is used to instruct multiple adjacent cells of the serving cell; measuring the multiple adjacent cells according to the second instruction message, to obtain a measurement result parameter of the multiple adjacent cells; sending the measurement result parameter of the multiple adjacent cells to the network device of the serving cell, wherein the measurement result parameter is used by the network device of the serving cell to determine the at least one candidate cell from the multiple adjacent cells; and receiving a third instruction message sent by the network device of the serving cell, wherein the third instruction message is used to instruct the terminal device to send the uplink reference signal to the network device of the at least one candidate cell.

In some embodiments, the third instruction message carries time-frequency domain resource configuration information of the uplink reference signal; and/or, the third instruction message carries power control parameter information of the uplink reference signal; and/or, the third instruction message carries configuration information of a transmission beam of the uplink reference signal.

In some embodiments, the power control parameter information includes the number of transmissions of the uplink reference signal that is either initial transmission or retransmission; the sending an uplink reference signal to a network device of at least one candidate cell includes: based on the power control parameter information being the initial transmission, sending the uplink reference signal to the network device of the at least one candidate cell at a set power corresponding to the initial transmission; and based on the power control parameter information being the retransmission, sending the uplink reference signal to the network device of the at least one candidate cell at a transmission power determined by a transmission power of a previous uplink reference signal and set power increase information.

In some embodiments, the power control parameter information includes power increase information; the sending an uplink reference signal to a network device of at least one candidate cell includes: sending the uplink reference signal to the network device of the at least one candidate cell at a transmission power determined by a transmission power of a previous uplink reference signal and the power increase information.

In some embodiments, the uplink synchronization method further includes: receiving a second instruction message sent by the network device of the serving cell, wherein the second instruction message is used to instruct multiple adjacent cells of the serving cell; measuring the multiple adjacent cells according to the second instruction message, to obtain a measurement result parameter of the multiple adjacent cells; and determining the at least one candidate cell from the multiple adjacent cells based on the measurement result parameter of the multiple adjacent cells.

In some embodiments, the at least one candidate cell is a cell whose measurement result parameter is higher than a set measurement result parameter and a difference between whose measurement result parameter and the set measurement result parameter is greater than or equal to a set offset, and the set measurement result parameter is determined based on the measurement result parameter of the serving cell.

In some embodiments, the performing uplink synchronization according to the TA information of the target cell includes: adjusting transmission time of the physical uplink shared channel (PUSCH) transmission using the TA information of the target cell based on a downlink reference timing of the terminal device.

According to another aspect of embodiments of the present disclosure, an uplink synchronization method is provided. The uplink synchronization method is performed by a network device of a serving cell where a terminal device is located and includes: receiving timing advance (TA) information sent by a network device of at least one candidate cell, wherein the TA information of the at least one candidate cell is determined based on an uplink reference signal sent by the terminal device; and sending TA indication information to the terminal device based on the TA information of the at least one candidate cell, wherein the TA indication information sent to the terminal device at least includes the TA information of a target cell to be switched to by the terminal device among the at least one candidate cell, and the TA information of the target cell is used by the terminal device to perform uplink synchronization based on the network device of the serving cell instructing the terminal device to switch to the target cell.

In some embodiments, the uplink reference signal includes at least one of: a preamble signal; a sounding reference signal; a demodulation reference signal; and, an uplink signal transmitted over the physical uplink control channel (PUCCH).

In some embodiments, the sending TA indication information to the terminal device based on the TA information of the at least one candidate cell includes: sending a first switching instruction to the terminal device based on the TA information of the target cell among the at least one candidate cell, wherein the first switching instruction is used to instruct the terminal device to switch to the target cell among the at least one candidate cell; the first switching instruction carries the TA indication information that includes cell indication information of the target cell and the TA information of the target cell

In some embodiments, the sending TA indication information to the terminal device based on the TA information of the at least one candidate cell includes: sending a first instruction message to the terminal device based on the TA information of the at least one candidate cell, wherein the first instruction message is used to instruct the terminal device to store or update the TA information of the at least one candidate cell; the first instruction message carries the TA indication information that includes cell indication information of the at least one candidate cell and the TA information of the at least one candidate cell.

In some embodiments, the sending TA indication information to the terminal device based on the TA information of the at least one candidate cell includes: sending a random access message to the terminal device, wherein the random access message is sent from the network device of the at least one candidate cell to the network device of the serving cell and carries the TA indication information, wherein the TA indication information includes cell indication information of the at least one candidate cell and the TA information of the at least one candidate cell.

In some embodiments, the cell indication information includes at least one of: an identity document (ID); a transmission configuration indicator (TCI) status associated with the cell; a control resource pool index associated with the cell; an uplink channel associated with the cell; and, a cell index.

In some embodiments, the TA information includes a TA value or a TA group

In some embodiments, the first instruction message is a MAC Control Element (MAC-CE) message or a Downlink Control Information (DCI) message.

In some embodiments, after sending a first instruction message to the terminal device based on the TA information of the at least one candidate cell, the uplink synchronization method further includes: sending a second switching instruction to the terminal device, wherein the second switching instruction is used to instruct the terminal device to switch to the target cell; and the second switching instruction carries the cell indication information of the target cell.

In some embodiments, the sending a first instruction message to the terminal device based on the TA information of the at least one candidate cell includes: periodically sending the first instruction message to the terminal device based on the TA information periodically determined by the network device of the at least one candidate cell.

In some embodiments, the uplink synchronization method further includes: sending a second instruction message to the terminal device, wherein the second instruction message is used to instruct the terminal device to measure multiple adjacent cells of the serving cell to obtain a measurement result parameter of the multiple adjacent cells; receiving the measurement result parameter of the multiple adjacent cells sent by the terminal device; determining the at least one candidate cell from the multiple adjacent cells based on the measurement result parameter; and sending a third instruction message to the terminal device, wherein the third instruction message is used to instruct the terminal device to send the uplink reference signal to the network device of the at least one candidate cell.

In some embodiments, the third instruction message carries time-frequency domain resource configuration information of the uplink reference signal; and/or, the third instruction message carries power control parameter information of the uplink reference signal; and/or, the third instruction message carries configuration information of a transmission beam of the uplink reference signal.

In some embodiments, the power control parameter information includes the number of transmissions of the uplink reference signal that is either initial transmission or retransmission; the power control parameter information being the initial transmission indicates sending the uplink reference signal to the network device of the at least one candidate cell at a set power corresponding to the initial transmission; the power control parameter information being the retransmission indicates sending the uplink reference signal to the network device of the at least one candidate cell at a transmission power determined by a transmission power of a previous uplink reference signal and set power increase information.

In some embodiments, the power control parameter information includes power increase information; the uplink reference signal is sent to the network device of the at least one candidate cell at a transmission power determined by a transmission power of a previous uplink reference signal and the power increase information.

In some embodiments, the uplink synchronization method further includes: sending a second instruction message to the terminal device, wherein the second instruction message is used to instruct the terminal device to measure multiple adjacent cells of the serving cell to obtain a measurement result parameter of the multiple adjacent cells, and to determine the at least one candidate cell from the multiple adjacent cells based on the measurement result parameter of the multiple adjacent cells.

In some embodiments, the at least one candidate cell is a cell whose measurement result parameter is higher than a set measurement result parameter and a difference between whose measurement result parameter and the set measurement result parameter is greater than or equal to a set offset, wherein the set measurement result parameter is determined based on the measurement result parameter of the serving cell.

According to another aspect of embodiments of the present disclosure, there is provided a terminal device, including a memory, a transceiver, and a processor. The memory is configured to store computer programs; the transceiver is configured to transmit and receive data under control of the processor; the processor is configured to read the computer programs from the memory and perform the following operations: sending an uplink reference signal to a network device of at least one candidate cell, wherein the uplink reference signal is configured by a network device of a serving cell where the terminal device is located, and is used to determine timing advance (TA) information by the network device of the at least one candidate cell; receiving TA indication information sent by the network device of the serving cell where the terminal device is located, wherein the TA indication information sent by the network device of the serving cell at least includes: TA information of a target cell to be switched to by the terminal device among the at least one candidate cell; and performing uplink synchronization according to the TA information of the target cell, based on the network device of the serving cell instructing the terminal device to switch to the target cell.

According to another aspect of embodiments of the present disclosure, there is provided a network device for a serving cell where a terminal device is located, including a memory, a transceiver, and a processor. The memory is configured to store computer programs; the transceiver is configured to transmit and receive data under control of the processor; the processor is configured to read the computer programs from the memory and perform the following operations: receiving timing advance (TA) information sent by a network device of at least one candidate cell, wherein the TA information of the at least one candidate cell is determined based on an uplink reference signal sent by the terminal device; and sending TA indication information to the terminal device based on the TA information of the at least one candidate cell, wherein the TA indication information sent to the terminal device at least includes the TA information of a target cell to be switched to by the terminal device among the at least one candidate cell, and the TA information of the target cell is used by the terminal device to perform uplink synchronization based on the network device of the serving cell instructing the terminal device to switch to the target cell.

According to another aspect of embodiments of the present disclosure, an uplink synchronization apparatus is provided. The uplink synchronization apparatus includes: a sending unit, configured to send an uplink reference signal to a network device of at least one candidate cell, wherein the uplink reference signal is configured by a network device of a serving cell where the terminal device is located, and is used to determine timing advance (TA) information by the network device of the at least one candidate cell; a receiving unit, configured to receive TA indication information sent by the network device of the serving cell where the terminal device is located, wherein the TA indication information

sent by the network device of the serving cell at least includes: TA information of a target cell to be switched to by the terminal device among the at least one candidate cell; and a synchronization unit, configured to perform uplink synchronization according to the TA information of the target cell, based on the network device of the serving cell instructing the terminal device to switch to the target cell.

According to another aspect of embodiments of the present disclosure, an uplink synchronization apparatus is provided. The uplink synchronization apparatus includes: a receiving unit, configured to receive timing advance (TA) information sent by a network device of at least one candidate cell, wherein the TA information of the at least one candidate cell is determined based on an uplink reference signal sent by the terminal device; and a sending unit, configured to send TA indication information to the terminal device based on the TA information of the at least one candidate cell, wherein the TA indication information sent to the terminal device at least includes the TA information of a target cell to be switched to by the terminal device among the at least one candidate cell, and the TA information of the target cell is used by the terminal device to perform uplink synchronization based on the network device of the serving cell instructing the terminal device to switch to the target cell.

According to another aspect of embodiments of the present disclosure, a processor-readable storage medium is provided. The processor-readable storage medium stores a computer program for causing a processor to perform the uplink synchronization method as described in any one of the above embodiments.

According to another aspect of embodiments of the present disclosure, a computer program product is provided. The computer program product includes a computer program that, when executed by a processor, implements the uplink synchronization method as described in any one of the above embodiments.

According to another aspect of embodiments of the present disclosure, a computer program is provided. The computer program includes a computer program code that, when executed on a computer, causes the computer to perform the uplink synchronization method as described in any one of the above embodiments.

According to embodiments of the present disclosure, by sending the uplink reference signal to the network device of the at least one candidate cell (wherein the uplink reference signal is configured by the network device of the serving cell where the terminal device is located, and is used to determine the timing advance (TA) information by the network device of the at least one candidate cell), receiving the TA indication information sent by the network device of the serving cell where the terminal device is located (wherein the TA indication information sent by the network device of the serving cell at least includes: the TA information of the target cell to be switched to by the terminal device among the at least one candidate cell), and performing the uplink synchronization according to the TA information of the target cell based on the network device of the serving cell instructing the terminal device to switch to the target cell, the terminal device sends, before performing the cell-to-cell switching, the uplink reference signal pre-configured by the network device of the serving cell where the terminal device is located, so that the network device of the at least one candidate cell determines the TA information based on the uplink reference signal, and obtains, through the TA indication information sent by the network device of the serving cell where the terminal device is located, the TA information of the target cell to be switched to by the terminal device among the at least one candidate cell; and achieves performing the uplink synchronization timely based on the pre-obtained TA information after performing the cell-to-cell switching.

It should be understood that the content described in this section is not intended to identify key or important features of the embodiments disclosed herein, nor is it intended to limit the scope of the present disclosure. The other features disclosed herein will be easily understood through the following specification.

**BRIEF DESCRIPTION OF THE DRAWINGS**

The accompanying drawings are intended for better understanding of the present disclosure and do not constitute any limitation on the present disclosure.

Figure 1 is a schematic diagram of a MAC RAR provided in an embodiment of the present disclosure.
Figure 2 is a schematic diagram of time adjustment for physical uplink shared channel transmission provided in an embodiment of the present disclosure;
Figure 3 is a schematic diagram of a MAC-CE message provided in an embodiment of the present disclosure;
Figure 4 is a flowchart of an uplink synchronization method provided in an embodiment of the present disclosure;
Figure 5 is a flowchart of another uplink synchronization method provided in an embodiment of the present disclosure;
Figure 6 is a schematic diagram of the structure of TA indication information provided in an embodiment of the present disclosure;
Figure 7 is a flowchart of another uplink synchronization method provided in an embodiment of the present disclosure;
Figure 8 is a flowchart of another uplink synchronization method provided in an embodiment of the present disclosure;
Figure 9 is a flowchart of another uplink synchronization method provided in an embodiment of the present disclosure;
Figure 10 is a flowchart of another uplink synchronization method provided in an embodiment of the present disclosure;

present disclosure;
Figure 11 is a flowchart of another uplink synchronization method provided in an embodiment of the present disclosure;
Figure 12 is a flowchart of another uplink synchronization method provided in an embodiment of the present disclosure;
Figure 13 is a schematic diagram of another MAC-CE message provided in an embodiment of the present disclosure;
Figure 14 is a schematic diagram of correspondence between cell indication information and PCI provided in an embodiment of the present disclosure;
Figure 15 is a flowchart of another uplink synchronization method provided in an embodiment of the present disclosure.
Figure 16 is a schematic diagram of the structure of a terminal device provided in an embodiment of the present disclosure;
Figure 17 is a schematic diagram of the structure of a network device of a serving cell provided in an embodiment of the present disclosure;
Figure 18 is a schematic diagram of the structure of an upstream synchronization apparatus provided in an embodiment of the present disclosure; and
Figure 19 is a schematic diagram of the structure of an upstream synchronization apparatus provided in an embodiment of the present disclosure.

**DETAILED DESCRIPTION**

In embodiments of the present disclosure, the term "and/or" describes an association relationship between associated objects and indicates that there can be three types of relationships. For example, A and/or B may represent: A exists alone, A and B both exist, and B exists alone. The character '/' generally indicates that the associated objects before and after the character have an 'or' relationship.

In embodiments of the present disclosure, the term "multiple" refers to two or more, and other quantifiers are similar to this term.

The technical solution in embodiments of the present disclosure will be described clearly and completely below in conjunction with the accompanying drawings. Obviously, the described embodiments are only a part of the embodiments in the present disclosure rather than all of them. Based on the embodiments of the present disclosure, all other embodiments obtained by those ordinary skilled in the art without creative labor are within the scope of protection of the present disclosure.

In the related art, during cell-to-cell switching, a terminal device first switches from a serving cell to a target cell, performs an uplink access in the target cell to obtain Timing Advance (TA) information, and performs uplink synchronization according to TA information indicated by a network device. The specific steps may be as follows:

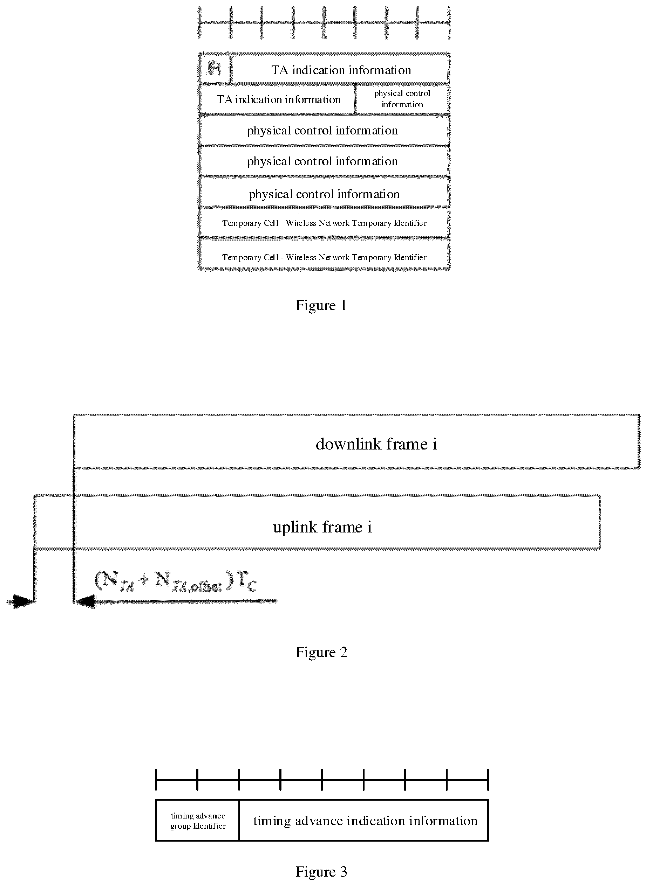

1. At an initial access, a terminal obtains a Random Access Channel (RACH) configuration, determines a time-frequency resource [TS38.213] for sending a preamble signal at a transmission time of a Physical Random Access Channel (PRACH) according to the RACH configuration, and performs an uplink access. Afterwards, the terminal device receives a RAR MAC protocol data unit (PDU) replied by a base station within a RA Response window. TA used for initial uplink synchronization is carried on the RAR MAC PDU. As shown in Figure 1, Figure 1 is a schematic diagram of a MAC RAR provided in an embodiment of the present disclosure. The MAC RAR in Figure 1 has 7 bytes, and R in Figure 1 represents a reserved bit of 1 byte. TA indication information (TA command (12 bits)) in the MAC RAR is used to indicate the TA used for the uplink synchronization of the terminal.
2. The terminal device calculates an absolute time adjustment amount $N_{TA}$ according to an indication of the network device in the TA indication information, and performs adjustment [TS38.213, section 4.2] on a physical uplink shared channel (PUSCH) for uplink sending MSG3 on the basis of downlink reception timing, that is, sending MSG3 $N_{TA}$ time in advance on the basis of a physical downlink shared channel (PDSCH) for downlink reception. The absolute time adjustment amount $N_{TA}$ is calculated as follows:

$$N_{TA} = TA * 16 * 64 / 2^u$$

where TA=0, 1, 2, ..., 3846; 2" * 15KHz represents subcarrier spacing. Figure 2 illustrates an adjustment process, in which the starting position of the uplink i-th frame transmission is advanced by $T_{TA} = (N_{TA} + N_{TA,offset})T_C$ on the basis of the starting position of the downlink i-th frame transmission, where $N_{TA,offset}$ depends on a duplex mode and a frequency band [TS38.133] of the uplink transmission, and is configured by the network device to the terminal device through indication information or provided by a pre-defined table; and $T_C$ is a basic time unit with a value of 1/(4096 * 480000) s=0.509ns.
3. During data transmission, if the network device detects uplink asynchrony, the network device detects the time adjustment amount through an uplink reference signal (such as a sounding reference signal and a demodulation reference signal), and performs uplink synchronization fine-tuning by sending a MAC-CE messages. One MAC-CE message is shown in Figure 3.

The TA information is adjusted in a unit of Timing Advance Group (TAG), and the TAG ID implicitly indicates the Component Carrier (CC) that uses the TA information for adjustment. The network device associates a set of CCs with the TAG ID through a Radio Resource Control (RRC) signaling. After receiving the indication information from the network device, the terminal device calculates the uplink time adjustment amount according to the following formula and obtains $N_{TA\_new}$:

$$N_{TA\_new} = N_{TA\_old} + (TA-31)*16*64/2^u$$

where TA =0, 1, 2, 3, ..., 63, $u$ is a parameter that describes the subcarrier spacing, $u$ = 0,1,2 representing the subcarrier spacing of 15kHz, 30kHz, and 60kHz respectively.

However, this approach of switching first before obtaining TA through performing the uplink access may result in a significant latency, especially when the terminal device frequently performs the cell-to-cell switching, greatly increasing the latency caused by the switching process.

Accordingly, in order to address the above problem, the present disclosure provides in embodiments an uplink synchronization method, apparatus, and related device, where the method and apparatus are based on the same inventive concept. As the method and apparatus address the problem in a similar principle, the apparatus and the method may be implemented by referring to each other, thus no repetition will be made here.

The uplink synchronization method, apparatus, and related device are described in detail below in embodiments of the present disclosure with reference to the accompanying drawings.

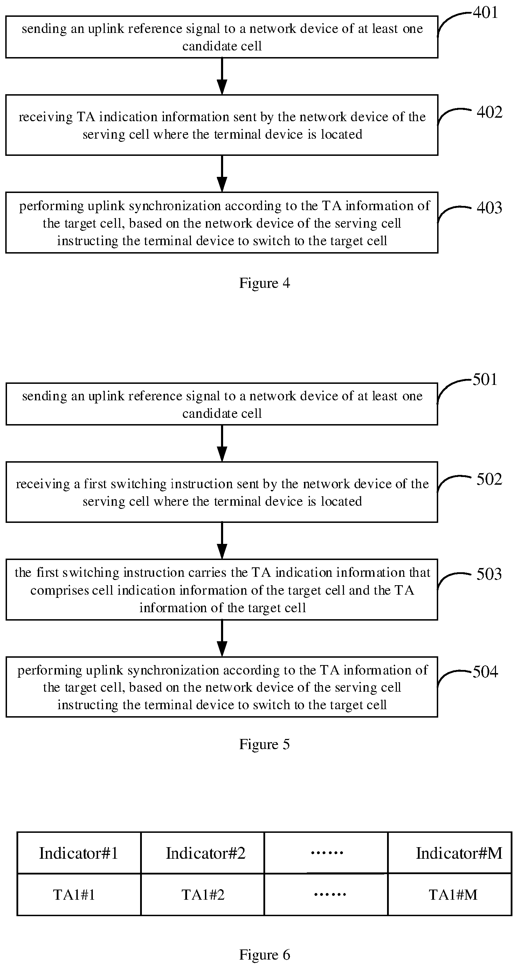

Figure 4 is a flowchart of an uplink synchronization method provided in an embodiment of the present disclosure.

It should be noted that the uplink synchronization method in this embodiment is executed by a terminal device.

As shown in Figure 4, the uplink synchronization method may include steps 401-403.

At the step 401, an uplink reference signal is sent to a network device of at least one candidate cell.

The uplink reference signal is configured by a network device of a serving cell where the terminal device is located, and is used to determine the timing advance (TA) information by the network device of the at least one candidate cell.

In embodiments of the present disclosure, the terminal device may send the uplink reference signal preconfigured by the network device of the serving cell where the terminal device is located to the network device of the at least one candidate cell. The network device of the at least one candidate cell may determine the Timing Advance (TA) information based on the uplink reference signal, and the network device of the at least one candidate cell may send the TA information to the network device of the serving cell where the terminal device is located.

It should be noted that the uplink reference signal may include at least one of: a preamble signal; a sounding reference signal (SRS); a demodulation reference signal (DMRS); and an uplink signal transmitted over the physical uplink control channel (PUCCH).

At the step 402: TA indication information, sent by the network device of the serving cell where the terminal device is located, is received.

The TA indication information sent by the network device of the serving cell at least includes: TA information of a target cell to be switched to by the terminal device among the at least one candidate cell.

In embodiments of the present disclosure, the network device of the serving cell where the terminal device is located sends the TA indication information to the terminal device, wherein the TA indication information sent by the network device of the serving cell at least includes: the TA information of the target cell to be switched to by the terminal device among the at least one candidate cell.

As an example, the TA indication information sent by the network device of the serving cell includes the TA information of the target cell to be switched to by the terminal device among the at least one candidate cell.

As another example, the TA indication information sent by the network device of the serving cell may include the TA information of the target cell to be switched to by the terminal device among the at least one candidate cell, and may also include the TA information of another candidate cell besides the target cell.

At the step 403, uplink synchronization is performed according to the TA information of the target cell, based on the network device of the serving cell instructing the terminal device to switch to the target cell.

Furthermore, based on the network device of the serving cell instructing the terminal device to switch to the target cell, the terminal device may perform the uplink synchronization according to the TA information of the target cell.

It should be noted that the TA information may include a TA value or a TA group, where the TA values within each TA group are same.

In summary, by sending the uplink reference signal to the network device of the at least one candidate cell, wherein the TA indication information sent by the network device of the serving cell at least includes: the TA information of the target cell to be switched to by the terminal device among the at least one candidate cell, receiving the TA indication information sent by the network device of the serving cell where the terminal device is located, wherein the TA indication information sent by the network device of the serving cell at least includes: the TA information of the target cell to be switched to by the terminal device among the at least one candidate cell, and performing the uplink synchronization according to the TA information of the target cell based on the network device of the serving cell instructing the terminal device to switch to the target cell, the terminal device before performing cell-to-cell switching sends the uplink reference signal pre-configured by the network device of the serving cell where the terminal device is located, so that the network device of the at least one candidate cell determines the TA information based on the uplink reference signal, and obtains, from the TA indication information sent by the network device of the serving cell where the terminal device is located, the TA information of the target cell to be switched to by the terminal device among the at least one candidate cell. Therefore, the terminal device can perform timely uplink synchronization based on the pre-obtained TA information after the cell-to-cell switching.

In order to clearly illustrate how to receive the TA indication information sent by the network device of the serving cell where the terminal device is located, as an example, the present disclosure proposes in an embodiment another uplink synchronization method. It should be noted that the uplink synchronization method in this embodiment is executed by a terminal device.

Figure 5 is a flowchart of another uplink synchronization method provided in an embodiment of the present disclosure.

As shown in Figure 5, the uplink synchronization method may include steps 501-504.

At the step 501, an uplink reference signal is sent to a network device of at least one candidate cell.

The uplink reference signal is configured by a network device of a serving cell where the terminal device is located, and is used to determine timing advance (TA) information by the network device of the at least one candidate cell.

At the step 502, a first switching instruction, sent by the network device of the serving cell where the terminal device is located, is received.

The first switching instruction is used to instruct the terminal device to switch to the target cell among the at least one candidate cell.

In embodiments of the present disclosure, the network device of the serving cell where the terminal device is located may send the first switching instruction to the terminal device. After receiving the first switching instruction, the terminal device may switch to the target cell among the at least one candidate cell according to the first switching instruction.

At the step 503, the first switching instruction carries the TA indication information that includes cell indication information of the target cell and the TA information of the target cell.

The cell indication information may include at least one of: an identity document (ID); a transmission configuration indicator (TCI) status associated with the cell; a control resource pool index associated with the cell and an uplink channel associated with the cell; and a cell index.

In embodiments of the present disclosure, the first switching instruction may carry the TA indication information that includes the cell indication information of the target cell and the TA information of the target cell.

For example, as shown in Figure 6, in the first column of Figure 6, when the target cell is Cell 1, the TA indication information includes the cell indication information (Indicator # 1) of Cell 1 and the TA information (TA1 # 1) of Cell 1; as shown in the second column of Figure 6, when the target cell is Cell 2, the TA indication information includes the cell indication information (Indicator # 2) of Cell 2 and the TA information (TA1 # 2) of Cell 2; similarly, as shown in column M of Figure 6, when the target cell is Cell M, the TA indication information includes the cell indication information (Indicator # M) of Cell M and the TA information (TA1 # M) of Cell M.

At the step 504, uplink synchronization is performed according to the TA information of the target cell, based on the network device of the serving cell instructing the terminal device to switch to the target cell.

The step 501 may be implemented in any of the embodiments of the present disclosure, which is not limited by the embodiment of the present disclosure nor will be repeated here.

In summary, by receiving the first switching instruction sent by the network device of the serving cell where the terminal device is located (wherein the first switching instruction is used to instruct the terminal device to switch to the target cell among the at least one candidate cell, and the first switching instruction carries the TA indication information that includes the cell indication information of the target cell and the TA information of the target cell), the terminal device once receiving the first switching instruction obtains, through the TA indication information carried in the first switching instruction sent to the terminal device by the network device of the serving cell where the terminal device is located, the TA indication information sent by the network device of the serving cell where the terminal device is located, and further obtains, through the TA indication information, the TA information of the target cell to be switched to by the terminal device among the at least one candidate cell.

It should be noted that the above possible implementations may be executed separately or combined together, which is not limited by the embodiments of the present disclosure.

In order to clearly illustrate how to receive the TA indication information sent by the network device of the serving cell where the terminal device is located, as an example, the present disclosure proposes in an embodiment another uplink synchronization method. It should be noted that the uplink synchronization method in this embodiment is executed by a terminal device.

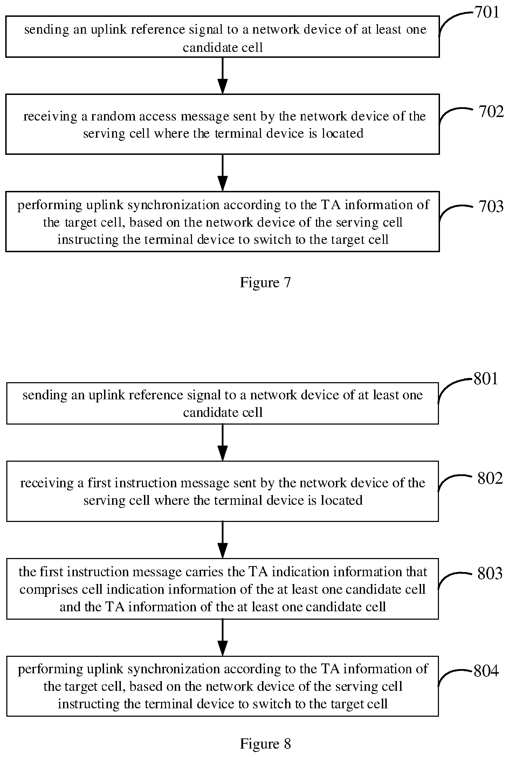

Figure 7 is a flowchart of another uplink synchronization method provided in an embodiment of the present disclosure.

As shown in Figure 7, the uplink synchronization method may include steps 701-703.

At the step 701: an uplink reference signal is sent to a network device of at least one candidate cell.

The uplink reference signal is configured by a network device of a serving cell where the terminal device is located, and is used to determine timing advance (TA) information by the network device of the at least one candidate cell.

At the step 702: a random access message, sent by the network device of the serving cell where the terminal device is located, is received.

The random access message is sent from the network device of the at least one candidate cell to the network device of the serving cell and carries the TA indication information. The TA indication information includes cell indication information of the at least one candidate cell, and the TA information of the at least one candidate cell.

As an example, the network device of the at least one candidate cell sends the random access message to the network device of the serving cell. The random access message may be a high-level signaling or L1 (layer 1) DCI, where the random access message carries the TA indication information that may include the cell indication information of the at least one candidate cell and the TA information of the at least one candidate cell.

The cell indication information may include at least one of: an identity document ID; a transmission configuration indicator (TCI) status associated with the cell; a control resource pool index associated with the cell; an uplink channel associated with the cell; and a cell index. The TA information may include a TA value or a TA group.

In addition, it should be noted that the random access message may be carried in a switching command by which the network device of the serving cell instructs the terminal device to switch to the target cell, or periodically sent to the terminal device through a specialized signaling by the network device of the serving cell, or carried in the RAR MAC PDU, where the network device of the serving cell may be configured whether or not to send the MAC PDU to the terminal device.

At the step 703, uplink synchronization is performed according to the TA information of the target cell, based on the network device of the serving cell instructing the terminal device to switch to the target cell.

Furthermore, the network device of the serving cell where the terminal device is located may indicate the target cell to be switched to by the terminal device among the at least one candidate cell. The terminal device may switch to the target cell and perform the uplink synchronization based on the TA information of the target cell. The step 701 may be implemented in any of the embodiments of the present disclosure, which is not limited by the embodiment of the present disclosure nor will be repeated here.

In summary, by receiving the random access message sent by the network device of the serving cell where the terminal device is located (wherein the random access message is sent from the network device of the at least one candidate cell to the network device of the serving cell, and carries the TA indication information that may include the cell indication information of the at least one candidate cell and the TA information of the at least one candidate cell), the terminal device determines the TA information of the target cell by receiving the random access message sent by the network device of the serving cell, and performs the uplink synchronization based on the TA information of the target cell.

In order to clearly illustrate how to receive the TA indication information sent by the network device of the serving cell where the terminal device is located, as another example, the present disclosure proposes in an embodiment another uplink synchronization method. It should be noted that the uplink synchronization method in this embodiment is executed by a terminal device.

Figure 8 is a flowchart of another uplink synchronization method provided in an embodiment of the present disclosure.

As shown in Figure 8, the uplink synchronization method may include steps 801-804。

At the step 801, an uplink reference signal is sent to a network device of at least one candidate cell.

The uplink reference signal is configured by a network device of a serving cell where the terminal device is located, and is used to determine timing advance (TA) information by the network device of the at least one candidate cell.

At the step 802: a first instruction message, sent by the network device of the serving cell where the terminal device is located, is received.

The first instruction message is used to instruct the terminal device to store or update the TA information of the at least one candidate cell.

In embodiments of the present disclosure, the network device of the serving cell where the terminal device is located may send the first instruction message to the terminal device after receiving the TA information sent by the network device of the at least one candidate cell. After receiving the first instruction message, the terminal device may store or update the TA information of the at least one candidate cell.

At the step 803, the first instruction message carries the TA indication information that includes cell indication information of the at least one candidate cell and the TA information of the at least one candidate cell.

In addition, the first instruction message sent to the terminal device by the network device of the serving cell where the terminal device is located carries the TA indication information, where the TA indication information may include the TA information of the target cell to be switched to by the terminal device among the at least one candidate cell, and the TA information and the cell indication information of another candidate cell besides the target cell.

It should be noted that the first instruction message may be a MAC Control Element (MAC-CE) message at the MAC layer, or a downlink control information (DCI) message.

It should also be noted that after the terminal device receives the first instruction message sent by the network device of the serving cell where the terminal device is located, the network device of the serving cell where the terminal device is located may send a second switching instruction to the terminal device, to instruct the terminal device to switch to the target cell, where the second switching instruction may also carry the cell indication information of the target cell.

At the step 804: uplink synchronization is performed according to the TA information of the target cell, based on the network device of the serving cell instructing the terminal device to switch to the target cell.

The steps 801 and 804 may be implemented in any of the embodiments of the present disclosure respectively, which are not limited by the embodiments of the present disclosure nor will be repeated here.

In summary, by receiving the first instruction message sent by the network device of the serving cell where the terminal device is located (wherein the first instruction message carries the TA indication information that includes the cell indication information of the at least one candidate cell and the TA information of the at least one candidate cell), the terminal device once receiving the first instruction message obtains, through the TA indication information carried in the first instruction message sent to the terminal device by the network device of the serving cell where the terminal device is located, the TA indication information sent by the network device of the serving cell where the terminal device is located, and obtains, through the TA indication information, the TA information of the target cell to be switched to by the terminal device among the at least one candidate cell.

It should be noted that the above possible implementations may be executed separately or combined together, which is not limited by the embodiments of the present disclosure.

In order to clearly illustrate how to receive the first instruction message sent by the network device of the serving cell in the above embodiments, as an example, the present disclosure proposes in an embodiment another uplink synchronization method. It should be noted that the uplink synchronization method in this embodiment is executed by a terminal device.

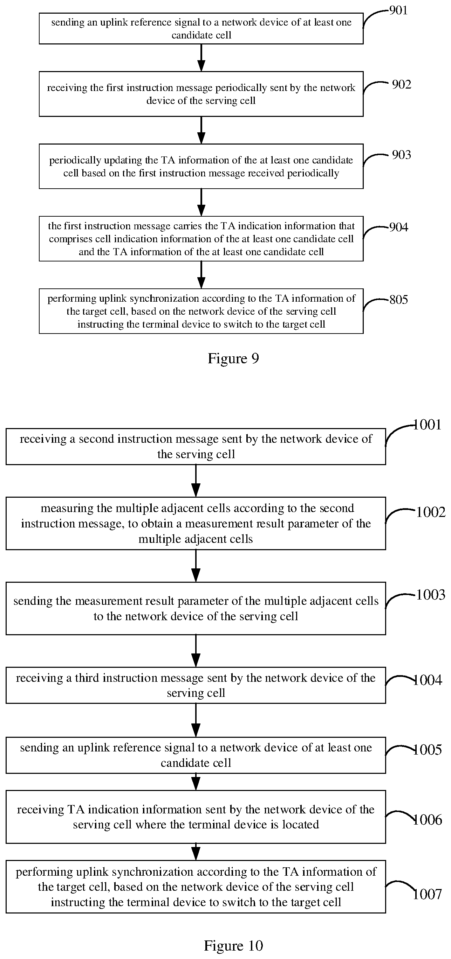

Figure 9 is a flowchart of another uplink synchronization method provided in an embodiment of the present disclosure.

As shown in Figure 9, the uplink synchronization method may include steps 901-905.

At the step 901, an uplink reference signal is sent to a network device of at least one candidate cell.

The uplink reference signal is configured by a network device of a serving cell where the terminal device is located, and is used to determine timing advance (TA) information by the network device of the at least one candidate cell.

At the step 902, a first instruction message, periodically sent by the network device of the serving cell, is received.

The first instruction message sent periodically is generated based on the TA information determined periodically by the network device of the at least one candidate cell.

As a possible implementation of an embodiment of the present disclosure, the network device of the at least one candidate cell may periodically determine the TA information of the at least one candidate cell, so that the network device of the at least one candidate cell may periodically send the TA information of the at least one candidate cell to the network device of the serving cell where the terminal device is located, and the network device of the serving cell where the terminal device is located periodically sends the first instruction message to the terminal device.

At the step 903, the TA information of the at least one candidate cell is periodically updated based on the first instruction message received periodically.

Furthermore, after periodically receiving the first instruction message sent by the network device of the serving cell where the terminal device is located, the terminal device may periodically update the TA information of the at least one candidate cell based on the first instruction message received periodically.

At the step 904, the first instruction message carries TA indication information that includes cell indication information of the at least one candidate cell and the TA information of the at least one candidate cell.

At the step 905, uplink synchronization is performed according to the TA information of the target cell, based on the network device of the serving cell instructing the terminal device to switch to the target cell.

The steps 901, 904 and 905 may be implemented in any of the embodiments of the present disclosure respectively, which are not limited by the embodiments of the present disclosure nor will be repeated here.

In summary, by receiving the first instruction message periodically sent by the network device of the serving cell, and periodically updating the TA information of the at least one candidate cell based on the first instruction message received periodically, the terminal device periodically updates the TA information of the at least one candidate cell, and performs the uplink synchronization based on the periodically updated TA information of the target cell among the at least one candidate cell, thereby improving accuracy of the uplink synchronization.

It should be noted that the above possible implementations may be executed separately or combined together, which is not limited by the embodiments of the present disclosure.

In order to implement the above embodiments, the present disclosure further proposes in an embodiment another uplink synchronization method. It should be noted that the uplink synchronization method in this embodiment is executed by a terminal device.

Figure 10 is a flowchart of another uplink synchronization method provided in an embodiment of the present disclosure.

As shown in Figure 10, the uplink synchronization method may include steps 1001-1007.

At the step 1001, a second instruction message, sent by the network device of the serving cell, is received.

The second instruction message is used to instruct multiple adjacent cells of the serving cell.

In embodiments of the present disclosure, the network device of the serving cell where the terminal device is located may send the second instruction message to the terminal device. After receiving the second instruction message, the terminal device may obtain the multiple adjacent cells of the serving cell where the terminal device is located.

At the step 1002, the multiple adjacent cells are measured according to the second instruction message, to obtain a measurement result parameter of the multiple adjacent cells.

As an example, after obtaining the multiple adjacent cells of the serving cell where the terminal device is located based on the second instruction message, the terminal device may perform a beam measurement on the multiple adjacent cells to obtain the measurement result parameter of the multiple adjacent cells, wherein the measurement result parameter may include at least one of: Reference Signal Received Power (RSRP), Received Signal Strength Indicator (RSSI), Reference Signal Received Quality (RSRQ), and Signal to Interference Noise Ratio (RS-SINR).

At the step 1003, the measurement result parameter of the multiple adjacent cells are sent to the network device of the serving cell.

The measurement result parameter is used by the network device of the serving cell to determine the at least one candidate cell from the multiple adjacent cells.

As an example, the terminal device sends the measurement result parameter of the multiple adjacent cells to the network device of the serving cell where the terminal device is located. The network device of the serving cell where the terminal device is located may determine the at least one candidate cell from the multiple adjacent cells based on the measurement result parameter.

The at least one candidate cell is a cell whose measurement result parameter is higher than a set measurement result parameter and a difference between whose measurement result parameter and the set measurement result parameter is greater than or equal to a set offset, wherein the set measurement result parameter is determined based on the measurement result parameter of the serving cell.

For example, the measurement result parameter sent by the terminal device to the network device of the serving cell where the terminal device is located is RSRQ, the set measurement result parameter is set RSRQ, the RSRQ of each candidate cell among the at least one candidate cell is higher than the set RSRQ, and the difference between the RSRQ of each candidate cell and the set RSRQ is greater than or equal to the set offset.

At the step 1004, a third instruction message, sent by the network device of the serving cell, is received.

The third instruction message is used to instruct the terminal device to send the uplink reference signal to the network device of the at least one candidate cell.

In embodiments of the present disclosure, the network device of the serving cell where the terminal device is located sends the third instruction message to the terminal device. After receiving the third instruction message sent by the network device of the serving cell where the terminal device is located, the terminal device may send the uplink reference signal to the network device of the at least one candidate cell.

As an example, the third instruction message may be a high-level signaling, MAC CE, or L1 (layer 1) DCI. When the third instruction message is the L1 DCI, a PDCCH command in a DCI format 1_0 may include an index of the at least one candidate cell, to instruct the terminal device to send the uplink reference signal to the candidate cell corresponding to the index. When the third instruction message is the MAC CE, the physical downlink shared channel (PDSCH) carrying the MAC CE is scheduled through the physical downlink control channel (PDCCH), and the cyclic redundancy check (CRC) of the PDCCH is scrambled through the cell-radio network temporary identifier (C-RNTI).

The third instruction message carries time-frequency domain resource configuration information of the uplink reference signal; and/or, the third instruction message carries power control parameter information of the uplink reference signal; and/or, the third instruction message carries configuration information of a transmission beam of the uplink reference signal.

As a possible implementation of an embodiment of the present disclosure, the power control parameter information includes the number of transmissions of the uplink reference signal that is either initial transmission or retransmission.

As another possible implementation of an embodiment of the present disclosure, the power control parameter information includes power increase information.

At the step 1005, the uplink reference signal is sent to the network device of the at least one candidate cell.

The uplink reference signal is configured by a network device of a serving cell where the terminal device is located, and is used to determine timing advance (TA) information by the network device of the at least one candidate cell.

As an example, the power control parameter information includes the number of transmissions of the uplink reference signal that is initial transmission. Based on the power control parameter information being the initial transmission, the uplink reference signal is sent to the network device of the at least one candidate cell at a set power corresponding to the initial transmission.

As another example, the power control parameter information includes the number of transmissions of the uplink reference signal that is retransmission. Based on the power control parameter information being the retransmission, the uplink reference signal is sent to the network device of the at least one candidate cell at a transmission power determined by a transmission power of a previous uplink reference signal and set power increase information.

For example, for the situation that the power control parameter information includes a power ramping indication added in the PDCCH command, where the indication may be 1 bit or N bits (N>1). When the power ramping indication is 1 bit, it indicates whether the physical random access channel (PRACH) transmission triggered by the PDCCH command is an initial transmission or a retransmission, for example, "0" indicates that the PRACH transmission triggered by the PDCCH command is an initial transmission, and "1" indicates that the PRACH transmission triggered by the PDCCH command is a retransmission, the terminal device determines the transmission power for the next PRACH transmission based on the previous transmission power according to the indication of the network device, until the maximum allowable transmission power of the terminal device is reached.

As another example, the power control parameter information includes power increase information. The uplink reference signal is sent to the network device of the at least one candidate cell at a transmission power determined by a transmission power of a previous uplink reference signal and the power increase information.

For example, the power control parameter information includes a power ramping (power increase) indication of N bits added in the PDCCH command, it may directly indicate the power increase information (transmission power ramping) of the PRACH triggered by the PDCCH command. For example, {00,01,10,11} represents the power increase information as 2dB, 4dB, 6dB, and 8dB, respectively. The terminal device, according to the indications of the network device, adds the indicated power increase information on the basis of the power for the previous transmission of the PRACH as the power for the next transmission of the PRACH.

At the step 1006: the TA indication information, sent by the network device of the serving cell where the terminal device is located, is received.

The TA indication information sent by the network device of the serving cell at least includes: the TA information of the target cell to be switched to by the terminal device among the at least one candidate cell.

At the step 1007, uplink synchronization is performed according to the TA information of the target cell, based on the network device of the serving cell instructing the terminal device to switch to the target cell.

The steps 1005 to 1007 may be implemented in any of the embodiments of the present disclosure respectively, which are not limited by the embodiments of the present disclosure nor will be repeated here.

In summary, by receiving the second instruction message sent by the network device of the serving cell, measuring the multiple adjacent cells according to the second instruction message, to obtain the measurement result parameter of the multiple adjacent cells, sending the measurement result parameter of the multiple adjacent cells to the network device of the serving cell, and receiving the third instruction message sent by the network device of the serving cell, the network device of the serving cell where the terminal equipment is located determines the at least one candidate cell based on the measurement result parameter of the multiple adjacent cells measured by the terminal device, and instructs the terminal device to send the uplink reference signal to the at least one candidate cell based on the third instruction message.

It should be noted that the above possible implementations may be executed separately or combined together, which is not limited by the embodiments of the present disclosure.

In order to implement the above embodiments, the present disclosure further proposes in an embodiment another uplink synchronization method. It should be noted that the uplink synchronization method in this embodiment is executed by a terminal device.

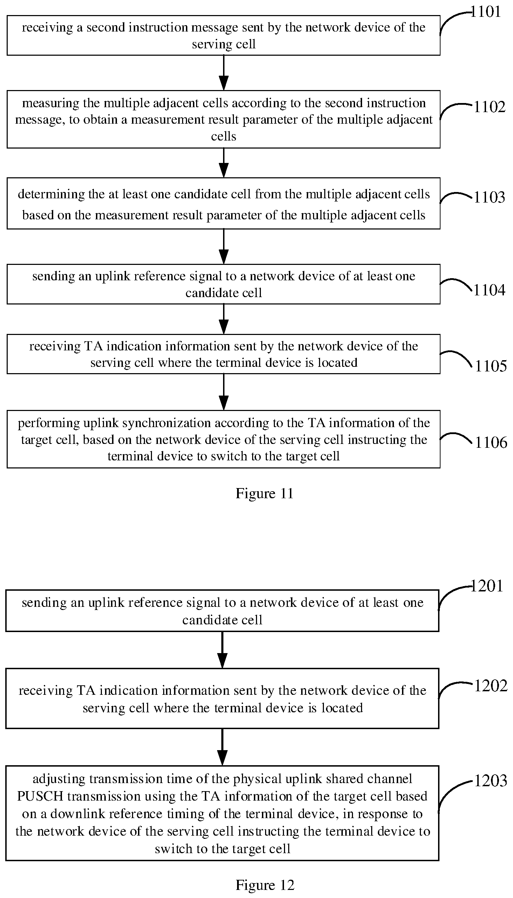

Figure 11 is a flowchart of another uplink synchronization method provided in an embodiment of the present disclosure.

As shown in Figure 11, the uplink synchronization method may include steps 1101-1106.

At the step 1101, a second instruction message, sent by the network device of the serving cell, is received.

The second instruction message is used to instruct multiple adjacent cells of the serving cell.

In embodiments of the present disclosure, the network device of the serving cell where the terminal device is located may send the second instruction message to the terminal device. After receiving the second instruction message, the terminal device may obtain the multiple adjacent cells of the serving cell where the terminal device is located.

At the step 1102, the multiple adjacent cells are measured according to the second instruction message, to obtain a measurement result parameter of the multiple adjacent cells.

As an example, after obtaining the multiple adjacent cells of the serving cell where the terminal device is located based on the second instruction message, the terminal device may perform a beam measurement on the multiple adjacent cells to obtain the measurement result parameter of the multiple adjacent cells, where the measurement result parameter may include at least one of: RSRP, RSSI, RSRQ, and RS-SINR.

At the step 1103, the at least one candidate cell is determined from the multiple adjacent cells based on the measurement result parameter of the multiple adjacent cells.

Further, the terminal device determines the at least one candidate cell from the multiple adjacent cells based on the measurement result parameter of the multiple adjacent cells.

In specific, the at least one candidate cell is a cell whose measurement result parameter is higher than a set measurement result parameter and a difference between whose measurement result parameter and the set measurement result parameter is greater than or equal to a set offset, wherein the set measurement result parameter is determined based on the measurement result parameter of the serving cell.

For example, the measurement result parameter of the serving cell where the terminal device is located is RSRQ, the set measurement result parameter is set RSRQ, the RSRQ of each candidate cell among the at least one candidate cell is higher than the set RSRQ, and the difference between the RSRQ of each candidate cell and the set RSRQ is greater than or equal to the set offset.

At the step 1104, uplink reference signal is sent to the network device of the at least one candidate cell.

The uplink reference signal is configured by a network device of a serving cell where the terminal device is located, and is used to determine timing advance (TA) information by the network device of the at least one candidate cell.

At the step 1105, TA indication information, sent by the network device of the serving cell where the terminal device is located, is received.

The TA indication information sent by the network device of the serving cell at least includes: TA information of the target cell to be switched to by the terminal device among the at least one candidate cell.

At the step 1106, uplink synchronization is performed according to the TA information of the target cell, based on the network device of the serving cell instructing the terminal device to switch to the target cell.

The steps 1104 to 1106 may be implemented in any of the embodiments of the present disclosure, which are not limited by the embodiments of the present disclosure nor will be repeated here.

In summary, by receiving the second instruction message sent by the network device of the serving cell, measuring the multiple adjacent cells according to the second instruction message to obtain the measurement result parameter of the multiple adjacent cells, and determining the at least one candidate cell from the multiple adjacent cells based on the measurement result parameter of the multiple adjacent cells, the terminal device determines the at least one candidate cell from the multiple adjacent cells based on the measurement result parameter of the multiple adjacent cells.

It should be noted that the above possible implementations may be executed separately or combined together, which is not limited by the embodiments of the present disclosure.

In order to clearly illustrate how to perform the uplink synchronization based on the TA information of the target cell, the present disclosure proposes in an embodiment another uplink synchronization method. It should be noted that the uplink synchronization method in this embodiment is executed by a terminal device.

Figure 12 is a flowchart of another uplink synchronization method provided in an embodiment of the present disclosure.

As shown in Figure 12, the uplink synchronization method may include steps 1201-1203.

At the step 1201, an uplink reference signal is sent to a network device of at least one candidate cell.

The uplink reference signal is configured by a network device of a serving cell where the terminal device is located, and is used to determine timing advance (TA) information by the network device of the at least one candidate cell.

At the step 1202, TA indication information, sent by the network device of the serving cell where the terminal device is located, is received.

The TA indication information sent by the network device of the serving cell at least includes: TA information of the target cell to be switched to by the terminal device among the at least one candidate cell.

At the step 1203, in response to the network device of the serving cell instructing the terminal device to switch to the target cell, transmission time of a physical uplink shared channel PUSCH transmission is adjusted using the TA information of the target cell based on a downlink reference timing of the terminal device.

In embodiments of the present disclosure, the terminal device calculates an absolute time adjustment amount based on the TA information of the target cell, and adjusts the transmission time of the Physical Uplink Shared Channel (PUSCH) transmission on the basis of the downlink reference timing of the terminal device.

The steps 1201 to 1202 may be implemented in any of the embodiments of the present disclosure, which are not limited by the embodiments of the present disclosure nor will be repeated here.

In summary, by adjusting the transmission time of the physical uplink shared channel (PUSCH) transmission using the TA information of the target cell based on the downlink reference timing of the terminal device, the terminal device performs the uplink synchronization in a timely manner according to the pre-obtained TA information of the target cell.

It should be noted that the above possible implementations may be executed separately or combined together, which is not limited by the embodiments of the present disclosure

In order to clearly illustrate the above embodiments, examples will now be given for clarification.

For example, taking the preamble signal as the uplink reference signal, the process of the uplink synchronization method in an embodiment of the present disclosure may be as following Step 1 to Step 9.

At the Step 1, a network device (a base station) of a serving cell where a terminal device is located instructs, through RRC configuration of signal status information-report configuration (CSI-ReportConfig) and signal status information-resource configuration (CSI-ResourceConfig), the terminal device to perform a beam measurement on cells in a cell list {PCI1, PCI2, PCI3, ..., PCI7} included in the CSI-ResourceConfig, and to periodically report a beam measurement result (SSBRI+L1-RSRP+PCI), where a resource for the beam measurement is a resource set {SSB1, SSB2, SSB3, SSB4, ..., SSB7}.

At the Step 2, the terminal device performs the measurement on the multiple adjacent cells based on the configuration of the network device of the serving cell where the terminal device is located, and reports the measurement result of the multiple adjacent cells to the network device of the serving cell where the terminal device is located according to the configuration of the network device of the serving cell where the terminal device is located, where the measurement result is L1-RSRP1+SSB1+PCI1, ..., L1-RSRP2+SSB2+PCI2, L1-RSRP7+SSB7+PCI7.

At the Step 3, the network device of the serving cell where the terminal device is located sorts the measurement result reported by the terminal device and determines four candidate cells as PCI1, PCI3, PCI5, and PCI7.

At the Step 4, the network device of the serving cell where the terminal device is located notifies, through the RRC configuration, the terminal device to send the preamble signal to the candidate cells.

At the Step 5, the terminal device sends respective preamble 1, preamble3, preamble5, and preamble7 to the candidate cells PCI1, PCI3, PCI5, and PCI7 using the reception SSB beam in a corresponding PRACH scenario according to the indication of the network device of the serving cell where the terminal device is located.

At the Step 6, the candidate cells receive the respective preamble signals sent by the terminal device, estimate respective TA values as TA1, TA3, TA5, and TA7 using the corresponding uplink reference signal, and send an estimation result to the network device of the serving cell where the terminal device is located.

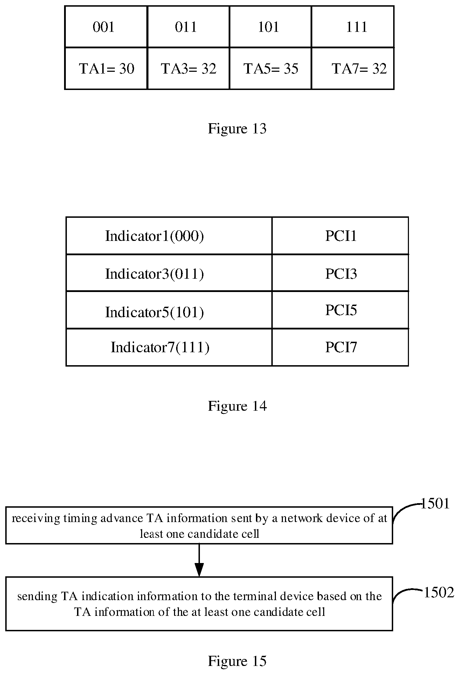

At the Step 7, the network device of the serving cell where the terminal device is located receives the TA values of all candidate cells, notifies the terminal device of all candidate cells and the respective TA values through an MAC-CE message (or a DCI message), and carries TA indication information in a switching command. Figure 13 shows the MAC-CE message carrying the indication information of the candidate cells and the respective TA information. In Figure 13, the correspondence between the cell indication information 001, 011, 101, and 111 and the respective Physical Cell Identifiers (PCIs) is implemented by the system in a predefined manner. Figure 14 shows a correspondence between the cell indication information and the respective PCIs.

It should be noted that by adding a field indicating the TA information to the DCI message if used, the corresponding TA information may be indicated through association of a Transmission Configuration Index (TCI) field in the DCI. The DCI here includes DCI for beam indication (DCI format 1-1 or DCI format 1-2), DCI for scheduling PUSCH (DCI format 0-0 or DCI format 0-1), and DCI for scheduling PUCCH (DCI format 1-0 or DCI format 1-1). In the n-th timeslot, the network device of the serving cell where the terminal device is located sends the DCI format 1-1 for the beam indication, which contains TCI status 1 and TA information, instructs the terminal device to send the subsequently scheduled PUSCH with the receiving beam of the reference signal contained in the TCI status 1, and adjusts the subsequently scheduled PUSCH transmission with the contained TA information. Alternatively, the corresponding TA information may be included in the DCI format 0-0 or the DCI format 0-1, and the terminal is instructed to adjust the PUSCH over the scheduled resource using the TA information contained in the DCI format 0-0 or the DCI format 0-1.

At the Step 8, the terminal device receives the switching command from the network device of the serving cell where the terminal device is located, wherein the switching command instructs the terminal device to switch from the current cell to the cell with PCI7. The switching command includes TA7 corresponding to the target cell determined in the Step 7. The terminal device receives TA7 information indicated by the network device of the serving cell where the terminal device is located and calculates the time adjustment amount $N_{TA\_new}$ for uplink transmission in the target cell (PCI7), $N_{TA\_new} = N_{TA\_old} + (TA-31)*16*64/2^u$, where TA=0, 1, 2, 3, ..., 63; $u$ is a parameter that describes the subcarrier spacing; and $u$ = 0,1,2 represents the subcarrier spacing of 15kHz, 30kHz, and 60kHz respectively.

For example, $N_{TA\_new} = 10 + (32-31)*16*64/2^2 = 266(T_c)$, where $N_{TA\_old}$=10, TA7=32, and $T_c$=1/(4096 * 480000) =0.509ns. The terminal device calculates an absolute time adjustment amount $T_{TA\_new} = (TA_{offset} + N_{TA\_new})T_c$ = (25600 + 266)$T_c$ =13.17(us) and sends an uplink channel or an uplink signal 13.17us in advance based on a downlink reception time point.

At the Step 9, the terminal device sends to the network device of the serving cell where the terminal device is located a Hybrid Automatic Repeat reQuest (HARQ) or acknowledgement (ACK) message that the terminal device has successfully accessed PCI7. Then, the network device of the serving cell where the terminal device is located notifies PCI7 through a relevant interface (such as X2) that this terminal device has successfully accessed.

For another example, taking the sounding reference signal as the uplink reference signal, the process of the uplink synchronization method in an embodiment of the present disclosure may be as following Step 1 to Step 9.

At the Step 1, a network device (a base station) of a serving cell where a terminal device is located instructs, through RRC configuration of signal status information-report configuration (CSI-ReportConfig) and signal status information-resource configuration (CSI-ResourceConfig), the terminal device to perform a beam measurement on cells in a cell list {PCI1, PCI2, PCI3, ..., PCI7} included in the CSI-ResourseConfig, and to periodically report a beam measurement result (SSBRI+L1-RSRP+PCI), where a resource for the beam measurement is a resource set {SSB1, SSB2, SSB3, SSB4, ..., SSB7}.

At the Step 2, the terminal device performs the measurement on the multiple adjacent cells based on the configuration of the network device of the serving cell where the terminal device is located, and reports the measurement result of the multiple adjacent cells to the network device of the serving cell where the terminal device is located according to the configuration of the network device of the serving cell where the terminal device is located, where the measurement result is L1-RSRP1+SSB1+PCI1, ..., L1-RSRP2+SSB2+PCI2, L1-RSRP7+SSB7+PCI7.

At the Step 3, the network device of the serving cell where the terminal device is located sorts the measurement result reported by the terminal device and determines four candidate cells as PCI1, PCI3, PCI5, and PCI7.

At the Step 4, the network device of the serving cell where the terminal device is located notifies, through the RRC configuration (such as sounding reference signal-resource), the terminal device to periodically send an SRS resource identifier and a corresponding time-frequency resource to the candidate cells;

At the Step 5, the terminal device sends respective srs-resource1, srs-resource3, srs-resource5, srs-resource7 to the candidate cells PCI1, PCI3, PCI5, and PCI7 over the corresponding time-frequency resource according to the indication of the network device of the serving cell where the terminal device is located.

At the Step 6, the candidate cells receive the respective SRS resources sent by the terminal device, estimate respective TA values as TA1, TA3, TA5, and TA7 using the corresponding uplink reference signal, and send an estimation result to the network device of the serving cell where the terminal device is located.

At the Step 7, the network device of the serving cell where the terminal device is located receives the TA information of all candidate cells, notifies through an MAC-CE message (or a DCI message) the terminal device of all candidate cells and the respective TA information, and carries TA indication information in a switching command. Figure 13 shows the MAC-CE message carrying the indication information of the candidate cells and the respective TA information. In Figure 13, the correspondence between the cell indication information 001, 011, 101, and 111 and the respective Physical Cell Identifiers (PCIs) is implemented by the system in a predefined manner. Figure 14 shows a correspondence between the cell indication information and the respective PCIs.

At the Step 8, the terminal device receives the switching command from the network device of the serving cell where the terminal device is located, wherein the switching command instructs the terminal device to switch from the current cell to the cell with PCI7. The terminal device calculates the time adjustment amount $N_{TA\_new}$ for uplink transmission in the target cell (PCI7) using the TA information stored previously, $N_{TA\_new} = N_{TA\_old} + (TA-31)*16*64/2^u$, where TA=0, 1, 2, 3, ..., 63; $u$ is a parameter that describes the subcarrier spacing; and $u$ = 0,1,2 represents the subcarrier spacing of 15kHz, 30kHz, and 60kHz respectively.

For example, $N_{TA\_new} = 10+(32-31)*16*64/2^2 = 266(T_c)$,
where $N_{TA\_old}$=10, TA7=32, and $T_c$=1/(4096 * 480000) =0.509ns. The terminal device calculates an absolute time adjustment amount $T_{TA\_new} = (TA_{offset} + N_{TA\_new})T_c$ = (25600+ 266) $T_c$ =13.17(us) and sends an uplink channel or an uplink signal 13.17us in advance based on a downlink reception time point.

At the Step 9, the terminal device sends to the network device of the serving cell where the terminal device is located a Hybrid Automatic Repeat reQuest (HARQ) or acknowledgement (ACK) message that the terminal device has successfully accessed PCI7. Then, the network device of the serving cell where the terminal device is located notifies PCI7 through a relevant interface (such as X2) that this terminal device has successfully accessed.

It should be noted that the network device sends a PDCCH command (DCI format 1_0) that may include a candidate cell index (01), instructing the terminal device to send a PRACH transmission to the candidate cell 13. The correspondence between the candidate cell index and the candidate cell index indication is configured to the terminal device through RRC, and the PDCCH command contains a transmission power ramping indication field. As an example, when the transmission power ramping indication field is 1 bit, for example, if the value of the indicator is "1", it indicates the PRACH transmission triggered by the terminal device this time as a retransmission. The terminal device adds a power increase value of 2dB to the power of the previous PRACH transmission based on the indication from the network device as the power for the next PRACH transmission. The power increase value is configured to the terminal device through RRC, and the terminal device sends the PRACH transmission to the candidate cell 13 according to the calculated transmission power. The beam sent by the terminal device for PRACH transmission may be a receiving beam of a Synchronization Signal/PBCH (abbreviated as SSB) index indicated in the PDCCH command.

As another example, when the transmission power ramping indication field is N bits, an absolute value of the transmission power increase (transmission power ramping) may be indicated in the PDCCH command, such as 3 bits, where "000" represents a power increase value of 0dB; "010" represents an increase in the transmission power of 2dB; "100" represents an increase in the transmission power of 4dB; and "110" represents an increase in the transmission power of 6dB. The terminal device adds, according to the indication from the network device, a power increase indication value, such as 6dB (110), on the basis of the previous transmission power, as the transmission power for the next PRACH transmission.

The uplink synchronization method in embodiments of the present disclosure is executed by the terminal device. By sending the uplink reference signal to the network device of the at least one candidate cell (wherein the uplink reference signal is configured by the network device of the serving cell where the terminal device is located, and is used to determine the timing advance (TA) information by the network device of the at least one candidate cell), receiving the TA indication information sent by the network device of the serving cell where the terminal device is located (wherein the TA indication information sent by the network device of the serving cell at least includes: the TA information of the target cell to be switched to by the terminal device among the at least one candidate cell), and performing the uplink synchronization according to the TA information of the target cell, based on the network device of the serving cell instructing the terminal device to switch to the target cell, the terminal device sends, before performing the cell-to-cell switching, the uplink reference signal pre-configured by the network device of the serving cell where the terminal device is located, so that the network device of the at least one candidate cell determines the TA information based on the uplink reference signal, and obtains, through the TA indication information sent by the network device of the serving cell where the terminal device is located, the TA information of the target cell to be switched to by the terminal device among the at least one candidate cell; and achieves performing the uplink synchronization timely based on the pre-obtained TA information after performing the cell-to-cell switching.

The above-mentioned uplink synchronization methods are executed by the terminal device, and the present disclosure further proposes in embodiments an uplink synchronization method executed by a network device of a serving cell where the terminal device is located.

Figure 15 is a flowchart of another uplink synchronization method provided in an embodiment of the present disclosure.

As shown in Figure 15, the uplink synchronization method is executed by the network device of the serving cell where the terminal device is located, and may include steps 1501-1502.

At the step 1501, timing advance (TA) information, sent by a network device of at least one candidate cell, is received.

The TA information of the at least one candidate cell is determined based on an uplink reference signal sent by the terminal device.

In embodiments of the present disclosure, the terminal device may send the uplink reference signal pre-configured by the network device of the serving cell where the terminal device is located to the network device of the at least one candidate cell. The network device of the at least one candidate cell may determine the TA information based on the uplink reference signal, and the network device of the at least one candidate cell may send the TA information to the network device of the serving cell where the terminal device is located.

It should be noted that the uplink reference signal may include at least one of: a preamble signal; a sounding reference signal; a demodulation reference signal; and, an uplink signal transmitted over the physical uplink control channel (PUCCH).

At the Step 1502: TA indication information is sent to the terminal device based on the TA information of the at least one candidate cell.

The TA indication information sent to the terminal device at least includes: TA information of a target cell to be switched to by the terminal device among the at least one candidate cell. The TA information of the target cell is used for the terminal device to perform uplink synchronization based on the network device of the serving cell instructing the terminal device to switch to the target cell.

In embodiments of the present disclosure, the network device of the serving cell where the terminal device is located sends the TA indication information to the terminal device, and the TA indication information sent to the terminal device at least includes: the TA information of the target cell to be switched to by the terminal device among the at least one candidate cell.

As an example, the TA indication information sent by the network device of the serving cell includes the TA information of the target cell to be switched to by the terminal device among the at least one candidate cell.

As another example, the TA indication information sent by the network device of the serving cell may include the TA information of the target cell to be switched to by the terminal device among the at least one candidate cell, and may also include the TA information of another candidate cell besides the target cell.

Further, based on the network device of the serving cell instructing the terminal device to switch to the target cell, the terminal device may perform the uplink synchronization based on the TA information of the target cell.

In summary, by receiving the timing advance (TA) information sent by the network device of the at least one candidate cell (wherein the TA information of the at least one candidate cell is determined based on the uplink reference signal sent by the terminal device), and sending the TA indication information to the terminal device based on the TA information of the at least one candidate cell (wherein the TA indication information sent to the terminal device at least includes: the TA information of the target cell to be switched to by the terminal device among the at least one candidate cell, and the TA information of the target cell is used by the terminal device to perform the uplink synchronization based on the network device of the serving cell instructing the terminal device to switch to the target cell), the terminal device before performing cell-to-cell switching obtains, through the TA indication information sent by the network device of the serving cell where the terminal device is located, the TA information of the target cell to be switched to by the terminal device among the at least one candidate cell,, and achieves performing the uplink synchronization timely based on the pre-obtained TA information after the cell-to-cell switching.

In a possible implementation of an embodiment of the present disclosure, the sending TA indication information to the terminal device based on the TA information of the at least one candidate cell includes: sending a first switching instruction to the terminal device based on the TA information of the target cell among the at least one candidate cell, wherein the first switching instruction is used to instruct the terminal device to switch to the target cell among the at least one candidate cell; and the first switching instruction carries the TA indication information that includes cell indication information of the target cell and the TA information of the target cell.

In a possible implementation of an embodiment of the present disclosure, the sending TA indication information to the terminal device based on the TA information of the at least one candidate cell includes: sending a first instruction message to the terminal device based on the TA information of the at least one candidate cell, wherein the first instruction message is used to instruct the terminal device to store or update the TA information of the at least one candidate cell; and the first instruction message carries the TA indication information that includes cell indication information of the at least one candidate cell and the TA information of the at least one candidate cell.

In a possible implementation of an embodiment of the present disclosure, the sending TA indication information to the terminal device based on the TA information of the at least one candidate cell includes: sending a random access message to the terminal device, wherein the random access message is sent from the network device of the at least one candidate cell to the network device of the serving cell and carries the TA indication information; wherein the TA indication information includes cell indication information of the at least one candidate cell and the TA information of the at least one candidate cell.

In a possible implementation of an embodiment of the present disclosure, the cell indication information includes at least one of: an identity document (ID); a transmission configuration indicator (TCI) status associated with the cell; a control resource pool index associated with the cell; an uplink channel associated with the cell; and, a cell index.

In a possible implementation of an embodiment of the present disclosure, the TA information includes a TA value or a TA group.

In a possible implementation of an embodiment of the present disclosure, the first instruction message is a MAC Control Element (MAC-CE) message or a Downlink Control Information (DCI) message.

In a possible implementation of an embodiment of the present disclosure, after sending a first instruction message to the terminal device based on the TA information of the at least one candidate cell, the uplink synchronization method further includes: sending a second switching instruction to the terminal device, wherein the second switching instruction is used to instruct the terminal device to switch to the target cell, and the second switching instruction carries the cell indication information of the target cell.

In a possible implementation of an embodiment of the present disclosure, the sending a first instruction message to the terminal device based on the TA information of the at least one candidate cell includes: periodically sending the first instruction message to the terminal device based on the TA information periodically determined by the network device of the at least one candidate cell.

In a possible implementation of an embodiment of the present disclosure, the uplink synchronization method includes: sending a second instruction message to the terminal device, wherein the second instruction message is used to instruct the terminal device to measure multiple adjacent cells of the serving cell, to obtain a measurement result parameter of the multiple adjacent cells; receiving the measurement result parameter of the multiple adjacent cells sent by the terminal device; determining the at least one candidate cell from the multiple adjacent cells based on the measurement result parameter; and sending a third instruction message to the terminal device, wherein the third instruction message is used to instruct the terminal device to send the uplink reference signal to the network device of the at least one candidate cell.

In a possible implementation of an embodiment of the present disclosure, the third instruction message carries time-frequency domain resource configuration information of the uplink reference signal; and/or, the third instruction message carries power control parameter information of the uplink reference signal; and/or, the third instruction message carries configuration information of a transmission beam of the uplink reference signal.

In a possible implementation of an embodiment of the present disclosure, the power control parameter information includes the number of transmissions of the uplink reference signal that is either initial transmission or retransmission; the power control parameter information being the initial transmission indicates sending the uplink reference signal to the network device of the at least one candidate cell at a set power corresponding to the initial transmission; and the power control parameter information being the retransmission indicates sending the uplink reference signal to the network device of the at least one candidate cell at a transmission power determined by a transmission power of a previous uplink reference signal and set power increase information.

In a possible implementation of an embodiment of the present disclosure, the power control parameter information includes power increase information; the uplink reference signal is sent to the network device of the at least one candidate cell at a transmission power determined by a transmission power of a previous uplink reference signal and the power increase information.

In a possible implementation of an embodiment of the present disclosure, the uplink synchronization method further includes: sending a second instruction message to the terminal device, wherein the second instruction message is used to instruct the terminal device to measure multiple adjacent cells of the serving cell to obtain a measurement result parameter of the multiple adjacent cells, and to determine the at least one candidate cell from the multiple adjacent cells based on the measurement result parameter of the multiple adjacent cells.

In a possible implementation of an embodiment of the present disclosure, the at least one candidate cell is a cell whose measurement result parameter is higher than a set measurement result parameter and a difference between whose measurement result parameter and the set measurement result parameter is greater than or equal to a set offset, wherein the set measurement result parameter is determined based on the measurement result parameter of the serving cell.

The uplink synchronization method in embodiments of the present disclosure is executed by the network device of the serving cell where the terminal device is located. By receiving the timing advance (TA) information sent by the network device of the at least one candidate cell (wherein the TA information of the at least one candidate cell is determined based on the uplink reference signal sent by the terminal device), and sending the TA indication information to the terminal device based on the TA information of the at least one candidate cell (wherein the TA indication information sent to the terminal device at least includes: the TA information of the target cell to be switched to by the terminal device among the at least one candidate cell, and the TA information of the target cell is used by the terminal device to perform the uplink synchronization based on the network device of the serving cell instructing the terminal device to switch to the target cell), the terminal device before performing cell-to-cell switching obtains, through the TA indication information sent by the network device of the serving cell where the terminal device is located, the TA information of the target cell to be switched to by the terminal device among the at least one candidate cell, and achieves performing the uplink synchronization timely based on the pre-obtained TA information after the cell-to-cell switching.

It should be noted that the explanation and illustration of the uplink synchronization method executed by the terminal device in any of the embodiments shown in Figures 4 to 14 also apply to the uplink synchronization method executed by the network device of the serving cell where the terminal device is located in these embodiments, both of which implement in the similar principle, thus no repetition will be made here.

In order to implement the above embodiments, the present disclosure proposes in an embodiment a terminal device.

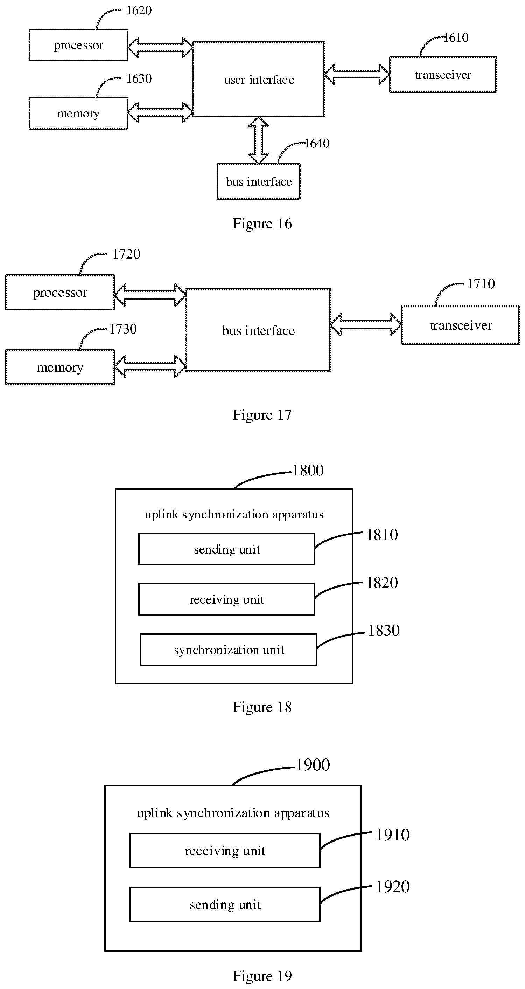

Figure 16 is a schematic diagram of the structure of a terminal device provided in an embodiment of the present disclosure.

As shown in Figure 16, the terminal device may include a transceiver 1610, a processor 1620, and a memory 1630.

The memory 1630 is used to store computer programs, transceiver 1610 is used to transmit and receive data under the control of processor 1620, and processor 1620 is used to read the computer programs from memory 1630 and to perform the following operations: sending an uplink reference signal to a network device of at least one candidate cell, wherein the uplink reference signal is configured by a network device of a serving cell where the terminal device is located, and is used to determine timing advance (TA) information by the network device of the at least one candidate cell; receiving TA indication information sent by the network device of the serving cell where the terminal device is located, wherein the TA indication information sent by the network device of the serving cell at least includes: TA information of a target cell to be switched to by the terminal device among the at least one candidate cell; and performing uplink synchronization according to the TA information of the target cell, based on the network device of the serving cell instructing the terminal device to switch to the target cell.

The transceiver 1610 is used to receive and transmit data under the control of processor 1620.

In Figure 16, the bus architecture may include any number of interconnected buses and bridges, and specifically link together various circuits such as one or more processors represented by the processor 1620 and memories represented by the memory 1630. The bus architecture may also link together various other circuits such as peripherals, voltage regulators, power management circuits, and the like, all of which are well-known in the art and therefore will not be further described herein. The bus interface provides an interface. The transceiver 1610 may be of multiple elements, that is, may include a transmitter and a receiver, which provide units for communicating with various other apparatus over a transmission medium, which includes transmission media such as wireless channels, wired channels, optical cables, and the like. For different user devices, the user interface 1640 may also be an interface capable of connecting external and internal devices, including but not limited to keyboards, displays, speakers, microphones, joysticks, etc.

The processor 1620 is responsible for managing the bus architecture and usual processing, and the memory 1630 may store data used by the processor 1620 in performing operations.

The processor 1620 may be a CPU, an ASIC, an FPGA, or a CPLD, and the processor 1620 may also adopt a multi-core architecture.

In a possible implementation of the present disclosure, the uplink reference signal includes at least one of: a preamble signal; a sounding reference signal (SRS); a demodulation reference signal (DMRS); and, an uplink signal transmitted over the physical uplink control channel (PUCCH).

In a possible implementation of the present disclosure, the receiving TA indication information sent by the network device of the serving cell where the terminal device is located includes: receiving a first switching instruction sent by the network device of the serving cell where the terminal device is located, wherein the first switching instruction is used to instruct the terminal device to switch to the target cell among the at least one candidate cell; the first switching instruction carries TA indication information that includes cell indication information of the target cell and the TA information of the target cell.

In a possible implementation of the present disclosure, the receiving TA indication information sent by the network device of the serving cell where the terminal device is located includes: receiving a first instruction message sent by the network device of the serving cell where the terminal device is located, wherein the first instruction message is used to instruct the terminal device to store or update the TA information of the at least one candidate cell; the first instruction message carries the TA indication information that includes cell indication information of the at least one candidate cell and the TA information of the at least one candidate cell.

In a possible implementation of the present disclosure, the receiving TA indication information sent by the network device of the serving cell where the terminal device is located includes: receiving a random access message sent by the network device of the serving cell where the terminal device is located, wherein the random access message is sent from the network device of the at least one candidate cell to the network device of the serving cell, and carries the TA indication information, wherein the TA indication information includes cell indication information of the at least one candidate cell and the TA information of the at least one candidate cell.

In a possible implementation of the present disclosure, the cell indication information includes at least one of: an identity document (ID); a transmission configuration indicator (TCI) status associated with the cell; a control resource pool index associated with the cell; an uplink channel associated with the cell; and a cell index.

In a possible implementation of the present disclosure, the TA information includes a TA value or a TA group.

In a possible implementation of the present disclosure, the first instruction message is a MAC Control Element (MAC-CE) message or a Downlink Control Information (DCI) message.

In a possible implementation of the present disclosure, after receiving a first instruction message sent by the network device of the serving cell where the terminal device is located, the operations further include: receiving a second switching instruction sent by the network device of the serving cell where the terminal device is located, wherein the second switching instruction is used to instruct the terminal device to switch to the target cell, and the second switching instruction carries cell indication information of the target cell.

In a possible implementation of the present disclosure, the receiving a first instruction message sent by the network device of the serving cell includes: receiving the first instruction message periodically sent by the network device of the serving cell, wherein the first instruction message sent periodically is generated based on the TA information periodically determined by the network device of the at least one candidate cell; and the operations further include periodically updating the TA information of the at least one candidate cell based on the first instruction message received periodically.

In a possible implementation of the present disclosure, the operations further include: receiving a second instruction message sent by the network device of the serving cell, wherein the second instruction message is used to instruct multiple adjacent cells of the serving cell; measuring the multiple adjacent cells according to the second instruction message, to obtain a measurement result parameter of the multiple adjacent cells; sending the measurement result parameter of the multiple adjacent cells to the network device of the serving cell, wherein the measurement result parameter is used by the network device of the serving cell to determine the at least one candidate cell from the multiple adjacent cells; and receiving a third instruction message sent by the network device of the serving cell, wherein the third instruction message is used to instruct the terminal device to send the uplink reference signal to the network device of the at least one candidate cell.

In a possible implementation of the present disclosure, the third instruction message carries time-frequency domain resource configuration information of the uplink reference signal; and/or, the third instruction message carries power control parameter information of the uplink reference signal; and/or, the third instruction message carries configuration information of a transmission beam of the uplink reference signal.

In a possible implementation of the present disclosure, the power control parameter information includes the number of transmissions of the uplink reference signal that is either initial transmission or retransmission; the sending an uplink reference signal to a network device of at least one candidate cell includes: based on the power control parameter information being the initial transmission, sending the uplink reference signal to the network device of the at least one candidate cell at a set power corresponding to the initial transmission; and based on the power control parameter information being the retransmission, sending the uplink reference signal to the network device of the at least one candidate cell at a transmission power determined by a transmission power of a previous uplink reference signal and set power increase information.

In a possible implementation of the present disclosure, the power control parameter information includes power increase information; the sending an uplink reference signal to a network device of at least one candidate cell includes: sending the uplink reference signal to the network device of the at least one candidate cell at a transmission power determined by a transmission power of a previous uplink reference signal and the power increase information.

In a possible implementation of the present disclosure, the operations further include: receiving a second instruction message sent by the network device of the serving cell, wherein the second instruction message is used to instruct multiple adjacent cells of the serving cell; measuring the multiple adjacent cells according to the second instruction message, to obtain a measurement result parameter of the multiple adjacent cells; and determining the at least one candidate cell from the multiple adjacent cells based on the measurement result parameter of the multiple adjacent cells.

In a possible implementation of the present disclosure, the at least one candidate cell is a cell whose measurement result parameter is higher than a set measurement result parameter and a difference between whose measurement result parameter and the set measurement result parameter is greater than or equal to a set offset, wherein the set measurement result parameter is determined based on the measurement result parameter of the serving cell.

In a possible implementation of the present disclosure, the performing uplink synchronization according to the TA information of the target cell includes: adjusting transmission time of the physical uplink shared channel (PUSCH) transmission using the TA information of the target cell based on a downlink reference timing of the terminal device.

It should be noted herein that the terminal device provided in the embodiments of the present disclosure is capable of realizing all the method steps implemented in the above described method embodiments of Figure 4 to Figure 13, and is capable of achieving the same technical effect, and the same portions of the embodiments of the present disclosure that are identical to the method embodiments and the beneficial effects will not be specifically repeated herein.

In order to implement the above embodiments, the present disclosure further proposes in an embodiment a network device for a serving cell where the terminal device is located.

Figure 17 is a schematic diagram of the structure of a network device of a serving cell where a terminal device is located, provided in an embodiment of the present disclosure.

As shown in Figure 17, the network device of the serving cell where the terminal device is located may include a transceiver 1710, a processor 1720, and a memory 1730.

The memory 1730 is used to store computer programs, transceiver 1710 is used to transmit and receive data under the control of the processor, and processor 1720 is used to read the computer programs from memory and to perform the following operations: receiving timing advance (TA) information sent by a network device of at least one candidate cell, wherein the TA information of the at least one candidate cell is determined based on an uplink reference signal sent by the terminal device; and sending TA indication information to the terminal device based on the TA information of the at least one candidate cell, wherein the TA indication information sent to the terminal device at least includes: the TA information of a target cell to be switched to by the terminal device among the at least one candidate cell, and the TA information of the target cell is used by the terminal device to perform uplink synchronization based on the network device of the serving cell instructing the terminal device to switch to the target cell.

The transceiver 1710 is used to receive and transmit data under the control of processor 1720.

In Figure 17, the bus architecture may include any number of interconnected buses and bridges, and specifically link together various circuits such as one or more processors represented by the processor 1720 and memories represented by the memory 1730. The bus architecture may also link together various other circuits such as peripherals voltage regulators, and power management circuits, and the like, all of which are well-known in the art and therefore will not be further described herein. The bus interface provides an interface. The transceiver 1710 may be of multiple elements, that is, may include a transmitter and a receiver, which provide units for communicating with various other apparatus over a transmission medium, which includes transmission media such as wireless channels, wired channels, optical cables, and the like. The processor 1720 is responsible for managing the bus architecture and usual processing, and the memory 1730 may store data used by the processor 1720 in performing operations.

The processor 1720 may be a CPU, an ASIC, an FPGA, or a CPLD, and the processor 1720 may also adopt a multi-core architecture.

In a possible implementation of the present disclosure, the uplink reference signal includes at least one of: a preamble signal; a sounding reference signal (SRS); a demodulation reference signal (DMRS); and, an uplink signal transmitted over the physical uplink control channel (PUCCH).

In a possible implementation of the present disclosure, the sending TA indication information to the terminal device based on the TA information of the at least one candidate cell includes: sending a first switching instruction to the terminal device based on the TA information of the target cell among the at least one candidate cell, wherein the first switching instruction is used to instruct the terminal device to switch to the target cell among the at least one candidate cell; the first switching instruction carries the TA indication information that includes cell indication information of the target cell and the TA information of the target cell.

In a possible implementation of the present disclosure, the sending TA indication information to the terminal device based on the TA information of the at least one candidate cell includes: sending a first instruction message to the terminal device based on the TA information of the at least one candidate cell, wherein the first instruction message is used to instruct the terminal device to store or update the TA information of the at least one candidate cell; the first instruction message carries the TA indication information that includes cell indication information of the at least one candidate cell and the TA information of the at least one candidate cell.

In a possible implementation of the present disclosure, the sending TA indication information to the terminal device based on the TA information of the at least one candidate cell includes: sending a random access message to the terminal device, wherein the random access message is sent from the network device of the at least one candidate cell to the network device of the serving cell and carries the TA indication information, wherein the TA indication information includes cell indication information of the at least one candidate cell and the TA information of the at least one candidate cell.

In a possible implementation of the present disclosure, the cell indication information includes at least one of: an identity document (ID); a transmission configuration indicator (TCI) status associated with the cell; a control resource pool index associated with the cell and an uplink channel associated with the cell; and, a cell index.

In a possible implementation of the present disclosure, the TA information includes a TA value or a TA group.

In a possible implementation of the present disclosure, the first instruction message is a MAC Control Element (MAC-CE) message or a Downlink Control Information (DCI) message.

In a possible implementation of the present disclosure, after sending a first instruction message to the terminal device based on the TA information of the at least one candidate cell, the operations further include: sending a second switching instruction to the terminal device, wherein the second switching instruction is used to instruct the terminal device to switch to the target cell; and the second switching instruction carries the cell indication information of the target cell.

In a possible implementation of the present disclosure, the sending a first instruction message to the terminal device based on the TA information of the at least one candidate cell includes: periodically sending the first instruction message to the terminal device based on the TA information periodically determined by the network device of the at least one candidate cell.

In a possible implementation of the present disclosure, the operations further include: sending a second instruction message to the terminal device, wherein the second instruction message is used to instruct the terminal device to measure multiple adjacent cells of the serving cell, to obtain a measurement result parameter of the multiple adjacent cells; receiving the measurement result parameter of the multiple adjacent cells sent by the terminal device; determining the at least one candidate cell from the multiple adjacent cells based on the measurement result parameter; and sending a third instruction message to the terminal device, wherein the third instruction message is used to instruct the terminal device to send the uplink reference signal to the network device of the at least one candidate cell.

In a possible implementation of the present disclosure, the third instruction message carries time-frequency domain resource configuration information of the uplink reference signal; and/or, the third instruction message carries power control parameter information of the uplink reference signal; and/or, the third instruction message carries configuration information of a transmission beam of the uplink reference signal.

In a possible implementation of the present disclosure, the power control parameter information includes the number of transmissions of the uplink reference signal that is either initial transmission or retransmission; the power control parameter information being the initial transmission indicates sending the uplink reference signal to the network device of the at least one candidate cell at a set power corresponding to the initial transmission; the power control parameter information being the retransmission indicates sending the uplink reference signal to the network device of the at least one candidate cell at a transmission power determined by a transmission power of a previous uplink reference signal and set power increase information.

In a possible implementation of the present disclosure, the power control parameter information includes power increase information; the uplink reference signal is sent to the network device of the at least one candidate cell at a transmission power determined by a transmission power of a previous uplink reference signal and the power increase information.

In a possible implementation of the present disclosure, the operations further include: sending a second instruction message to the terminal device, wherein the second instruction message is used to instruct the terminal device to measure multiple adjacent cells of the serving cell to obtain a measurement result parameter of the multiple adjacent cells, and to determine the at least one candidate cell from the multiple adjacent cells based on the measurement result parameter of the multiple adjacent cells.

In a possible implementation of the present disclosure, the at least one candidate cell is a cell whose measurement result parameter is higher than a set measurement result parameter and a difference between whose measurement result parameter and the set measurement result parameter is greater than or equal to a set offset, wherein the set measurement result parameter is determined based on the measurement result parameter of the serving cell.

It should be noted herein that the network device for the serving cell where the terminal device is located provided in the embodiments of the present disclosure is capable of realizing all the method steps implemented in the above described method embodiment of Figure 15, and is capable of achieving the same technical effect, and the same portions of the embodiments of the present disclosure that are identical to the method embodiments and the beneficial effects will not be specifically repeated herein.

Corresponding to the above described uplink synchronization method provided in the embodiments of Figure 4 to Figure 14, the present disclosure further provides in an embodiment an uplink synchronization apparatus, and because the uplink synchronization apparatus provided in the embodiment of the present disclosure corresponds to the above described uplink synchronization method provided in the embodiments of Figure 4 to Figure 14, the embodiments of the uplink synchronization method are also applicable to the uplink synchronization apparatus provided in the embodiment of the present disclosure, and will not be described in detail in the embodiments of the present disclosure.

Figure 18 is a schematic diagram of the structure of an uplink synchronization apparatus provided in an embodiment of the present disclosure. It should be noted that the uplink synchronization apparatus is applied to a terminal device.

As shown in Figure 18, the uplink synchronization apparatus 1800 includes a sending unit 1810, a receiving unit 1820, and a synchronization unit 1830.

The sending unit 1810 is configured to send an uplink reference signal to a network device of at least one candidate cell, wherein the uplink reference signal is configured by a network device of a serving cell where the terminal device is located, and is used to determine timing advance (TA) information by the network device of the at least one candidate cell. The receiving unit 1820 is configured to receive TA indication information sent by the network device of the serving cell where the terminal device is located, wherein the TA indication information sent by the network device of the serving cell at least includes: TA information of a target cell to be switched to by the terminal device among the at least one candidate cell. The synchronization unit 1830 is configured to perform uplink synchronization according to the TA information of the target cell, based on the network device of the serving cell instructing the terminal device to switch to the target cell.

As a possible implementation of an embodiment of the present disclosure, the uplink reference signal includes at least one of: a preamble signal; a sounding reference signal (SRS); a demodulation reference signal (DMRS); and, an uplink signal transmitted over the physical uplink control channel (PUCCH).

As a possible implementation of an embodiment of the present disclosure, the receiving unit 1820 is further configured to: receive a first switching instruction sent by the network device of the serving cell where the terminal device is located, wherein the first switching instruction is used to instruct the terminal device to switch to the target cell among the at least one candidate cell, wherein the first switching instruction carries TA indication information that includes cell indication information of the target cell and the TA information of the target cell.

As a possible implementation of an embodiment of the present disclosure, the receiving unit 1820 is further configured to: receive a first instruction message sent by the network device of the serving cell where the terminal device is located, wherein the first instruction message is used to instruct the terminal device to store or update the TA information of the at least one candidate cell; the first instruction message carries the TA indication information that includes cell indication information of the at least one candidate cell and the TA information of the at least one candidate cell.

As a possible implementation of an embodiment of the present disclosure, the receiving unit 1820 is further configured to: receive a random access message sent by the network device of the serving cell where the terminal device is located, wherein the random access message is sent from the network device of the at least one candidate cell to the network device of the serving cell, and carries the TA indication information, wherein the TA indication information includes cell indication information of the at least one candidate cell and the TA information of the at least one candidate cell.

As a possible implementation of an embodiment of the present disclosure, the cell indication information includes at least one of: an identity document (ID); a transmission configuration indicator (TCI) status associated with the cell; a control resource pool index associated with the cell; an uplink channel associated with the cell; and, a cell index.

As a possible implementation of an embodiment of the present disclosure, the TA information includes a TA value or a TA group.

As a possible implementation of an embodiment of the present disclosure, the first instruction message is a MAC Control Element (MAC-CE message) or a Downlink Control Information (DCI) message.

As a possible implementation of an embodiment of the present disclosure, the receiving unit 1820 is further configured to: receive a second switching instruction sent by the network device of the serving cell where the terminal device is located, wherein the second switching instruction is used to instruct the terminal device to switch to the target cell, and the second switching instruction carries cell indication information of the target cell.

As a possible implementation of an embodiment of the present disclosure, the receiving unit 1820 is further configured to: receive the first instruction message periodically sent by the network device of the serving cell, wherein the first instruction message sent periodically is generated based on the TA information periodically determined by the network device of the at least one candidate cell; the uplink synchronization apparatus further includes: an update unit, configured to periodically update the TA information of the at least one candidate cell based on the first instruction message received periodically.

As a possible implementation of an embodiment of the present disclosure, the uplink synchronization apparatus further includes: a first measurement unit.

The receiving unit 1820 is further configured to receive a second instruction message sent by the network device of the serving cell, wherein the second instruction message is used to instruct multiple adjacent cells of the serving cell. The first measurement unit is configured to measure the multiple adjacent cells according to the second instruction message, to obtain a measurement result parameter of the multiple adjacent cells. The sending unit is further configured to send the measurement result parameter of the multiple adjacent cells to the network device of the serving cell, wherein the measurement result parameter is used by the network device of the serving cell to determine the at least one candidate cell from the multiple adjacent cells. The receiving unit 1820 is further configured to receive a third instruction message sent by the network device of the serving cell, wherein the third instruction message is used to instruct the terminal device to send the uplink reference signal to the network device of the at least one candidate cell.

As a possible implementation of an embodiment of the present disclosure, the third instruction message carries time-frequency domain resource configuration information of the uplink reference signal; and/or, the third instruction message carries power control parameter information of the uplink reference signal; and/or, the third instruction message carries configuration information of a transmission beam of the uplink reference signal.

As a possible implementation of an embodiment of the present disclosure, the power control parameter information includes the number of transmissions of the uplink reference signal that is either initial transmission or retransmission. The sending unit 1810 is configured to: send the uplink reference signal to the network device of the at least one candidate cell at a set power corresponding to the initial transmission, based on the power control parameter information being the initial transmission; and send the uplink reference signal to the network device of the at least one candidate cell at a transmission power determined by a transmission power of a previous uplink reference signal and set power increase information, based on the power control parameter information being the retransmission.

As a possible implementation of an embodiment of the present disclosure, the power control parameter information includes power increase information; the sending unit 1810 is configured to send the uplink reference signal to the network device of the at least one candidate cell at a transmission power determined by a transmission power of a previous uplink reference signal and the power increase information.

As a possible implementation of an embodiment of the present disclosure, the uplink synchronization apparatus further includes: a second measurement unit and a determination unit.

The receiving unit 1820 is further configured to: receive a second instruction message sent by the network device of the serving cell, wherein the second instruction message is used to instruct multiple adjacent cells of the serving cell. The second measurement unit is configured to measure the multiple adjacent cells according to the second instruction message, to obtain a measurement result parameter of the multiple adjacent cells. The determination unit is configured to determine the at least one candidate cell from the multiple adjacent cells based on the measurement result parameter of the multiple adjacent cells.

As a possible implementation of an embodiment of the present disclosure, the at least one candidate cell is a cell whose measurement result parameter is higher than a set measurement result parameter and a difference between whose measurement result parameter and the set measurement result parameter is greater than or equal to a set offset, wherein the set measurement result parameter is determined based on the measurement result parameter of the serving cell.

As a possible implementation of an embodiment of the present disclosure, the synchronization unit 1830 is further configured to adjust transmission time of the physical uplink shared channel (PUSCH) transmission using the TA information of the target cell based on a downlink reference timing of the terminal device.

It should be noted therein that the above uplink synchronization apparatus provided in the embodiments of the present disclosure is capable of realizing all the method steps implemented in the above described method embodiments of Figure 4 to Figure 14, and is capable of achieving the same technical effect, and the same portions of the embodiments of the present disclosure that are identical to the method embodiments and the beneficial effects will not be specifically repeated herein.

Corresponding to the above described uplink synchronization method provided in the embodiment of Figure 15, the present disclosure further provides in an embodiment an uplink synchronization apparatus, and because the uplink synchronization apparatus provided in the embodiment of the present disclosure corresponds to the above described uplink synchronization method provided in the embodiment of Figure 15, the embodiments of the uplink synchronization method are also applicable to the synchronization method apparatus provided in the embodiment of the present disclosure, and will not be described in detail in the embodiment of the present disclosure.

Figure 19 is a schematic diagram of the structure of an uplink synchronization apparatus provided in an embodiment of the present disclosure. It should be noted that the uplink synchronization apparatus is applied to a network device of a serving cell where a terminal device is located.

As shown in Figure 19, the uplink synchronization apparatus 1900 includes a receiving unit 1910 and a sending unit 1920.

The receiving unit 1910 is configured to receive timing advance (TA) information sent by a network device of at least one candidate cell, wherein the TA information of the at least one candidate cell is determined based on an uplink reference signal sent by the terminal device. The sending unit 1920 is configured to send TA indication information to the terminal device based on the TA information of the at least one candidate cell, wherein the TA indication information sent to the terminal device at least includes the TA information of a target cell to be switched to by the terminal device among the at least one candidate cell, and the TA information of the target cell is used by the terminal device to perform uplink synchronization based on the network device of the serving cell instructing the terminal device to switch to the target cell.

As a possible implementation of an embodiment of the present disclosure, the uplink reference signal includes at least one of: a preamble signal; a sounding reference signal (SRS); a demodulation reference signal (DMRS); and, an uplink signal transmitted over the physical uplink control channel (PUCCH).

As a possible implementation of an embodiment of the present disclosure, the sending unit 1920 is further configured to: send a first switching instruction to the terminal device based on the TA information of the target cell among the at least one candidate cell, wherein the first switching instruction is used to instruct the terminal device to switch to the target cell among the at least one candidate cell; the first switching instruction carries the TA indication information that includes cell indication information of the target cell and the TA information of the target cell.

As a possible implementation of an embodiment of the present disclosure, the sending unit 1920 is further configured to: send a first instruction message to the terminal device based on the TA information of the at least one candidate cell, wherein the first instruction message is used to instruct the terminal device to store or update the TA information of the at least one candidate cell; the first instruction message carries the TA indication information that includes cell indication information of the at least one candidate cell and the TA information of the at least one candidate cell.

As a possible implementation of an embodiment of the present disclosure, the sending TA indication information to the terminal device based on the TA information of the at least one candidate cell includes: sending a random access message to the terminal device, wherein the random access message is sent from the network device of the at least one candidate cell to the network device of the serving cell and carries the TA indication information, wherein the TA indication information includes cell indication information of the at least one candidate cell and the TA information of the at least one candidate cell.

As a possible implementation of an embodiment of the present disclosure, the cell indication information includes at least one of: an identity document (ID); a transmission configuration indicator (TCI) status associated with the cell; a control resource pool index associated with the cell; an uplink channel associated with the cell; and a cell index.

As a possible implementation of an embodiment of the present disclosure, the TA information includes a TA value or a TA group.

As a possible implementation of an embodiment of the present disclosure, the first instruction message is a MAC Control Element (MAC-CE) message or a Downlink Control Information (DCI) message.

As a possible implementation of an embodiment of the present disclosure, the sending unit 1920 is further configured to: send a second switching instruction to the terminal device, wherein the second switching instruction is used to instruct the terminal device to switch to the target cell; and the second switching instruction carries the cell indication information of the target cell.

As a possible implementation of an embodiment of the present disclosure, the sending unit 1920 is further configured to periodically send the first instruction message to the terminal device based on the TA information periodically determined by the network device of the at least one candidate cell.

As a possible implementation of an embodiment of the present disclosure, the uplink synchronization device further includes a determination unit.

The sending unit 1920 is further configured to send a second instruction message to the terminal device, wherein the second instruction message is used to instruct the terminal device to measure multiple adjacent cells of the serving cell to obtain a measurement result parameter of the multiple adjacent cells. The receiving unit 1910 is further configured to receive the measurement result parameter of the multiple adjacent cells sent by the terminal device. The determining unit is further configured to determine the at least one candidate cell from the multiple adjacent cells based on the measurement result parameter. The sending unit 1920 is further configured to send a third instruction message to the terminal device, wherein the third instruction message is used to instruct the terminal device to send the uplink reference signal to the network device of the at least one candidate cell.

As a possible implementation of an embodiment of the present disclosure, the third instruction message carries time-frequency domain resource configuration information of the uplink reference signal; and/or, the third instruction message carries power control parameter information of the uplink reference signal; and/or, the third instruction message carries configuration information of a transmission beam of the uplink reference signal.

As a possible implementation of an embodiment of the present disclosure, the power control parameter information includes the number of transmissions of the uplink reference signal that is either initial transmission or retransmission; the power control parameter information being the initial transmission indicates sending the uplink reference signal to the network device of the at least one candidate cell at a set power corresponding to the initial transmission; the power control parameter information being the retransmission indicates sending the uplink reference signal to the network device of the at least one candidate cell at a transmission power determined by a transmission power of a previous uplink reference signal and set power increase information.

As a possible implementation of an embodiment of the present disclosure, the power control parameter information includes power increase information; the uplink reference signal is sent to the network device of the at least one candidate cell at a transmission power determined by a transmission power of a previous uplink reference signal and the power increase information.

As a possible implementation of an embodiment of the present disclosure, the sending unit 1920 is further configured to: send a second instruction message to the terminal device, wherein the second instruction message is used to instruct the terminal device to measure multiple adjacent cells of the serving cell to obtain a measurement result parameter of the multiple adjacent cells, and to determine the at least one candidate cell from the multiple adjacent cells based on the measurement result parameter of the multiple adjacent cells.

As a possible implementation of an embodiment of the present disclosure, the at least one candidate cell is a cell whose measurement result parameter is higher than a set measurement result parameter and a difference between whose measurement result parameter and the set measurement result parameter is greater than or equal to a set offset, wherein the set measurement result parameter is determined based on the measurement result parameter of the serving cell.

It should be noted herein that the above described uplink synchronization apparatus provided in the embodiments of the present disclosure is capable of realizing all the method steps implemented in the above described method embodiment of Figure 15, and is capable of achieving the same technical effect, and the same portions of the embodiments of the present disclosure that are identical to the method embodiments and the beneficial effects will not be specifically repeated herein.

It should be noted that the functional units in various embodiments of the present disclosure may be integrated into one processing unit, or physically exist separately, or two or more units may be integrated into one unit. The integrated units mentioned above may be implemented in the form of hardware or software functional units.

The integrated unit may be stored in a processor-readable storage medium if implemented in the form of a software functional unit and sold or used as a stand-alone product. Based on this understanding, the technical solution of the present disclosure essentially or a part, which contributes to the prior art, or all or part of the technical solution, may be embodied in the form of a software product, and the computer software product is stored in a storage medium and includes a number of instructions to cause a computer device (which may be a personal computer, a server, or a network device, and the like) or a processor to execute all or part of the steps of the methods of various embodiments of the present disclosure. The aforementioned storage medium includes a USB flash drive, a mobile hard disk, a Read-Only Memory (ROM), a Random Access Memory (RAM), a diskette or a CD-ROM, and various other media that can store program code.

In order to implement the above embodiments, the present disclosure further proposes in an embodiment a processor readable storage medium.

The processor readable storage medium having stored a computer program configured to cause a processor to execute the uplink synchronization method of any of the embodiments of the present disclosure as shown in Figure 4 to Figure 14.

The processor readable storage medium may be any available medium or data storage device that the processor is able to access, including, but not limited to, a magnetic memory (for example, a floppy disk, a hard disk, a magnetic tape, a magnetic optical disk (MO), and the like), an optical memory (for example, a CD, a DVD, a BD, an HVD, and the like), and a semiconductor memory (for example, a ROM, an EPROM, an EEPROM, a non-volatile memory (NAND FLASH), a solid-state disk (SSD)).

In order to implement the above embodiments, the present disclosure further proposes in an embodiment a processor readable storage medium.

The processor readable storage medium having stored a computer program configured to cause a processor to execute the uplink synchronization method of any of the embodiments of the present disclosure as shown in Figure 15.

The processor readable storage medium may be any available medium or data storage device that the processor is able to access, including, but not limited to, a magnetic memory (for example, a floppy disk, a hard disk, a magnetic tape, a magnetic optical disk (MO), and the like), an optical memory (for example, a CD, a DVD, a BD, an HVD, and the like), and a semiconductor memory (for example, a ROM, an EPROM, an EEPROM, a non-volatile memory (NAND FLASH), a solid-state disk (SSD)).

In order to implement the above embodiments, the present disclosure further proposes in an embodiment a computer program product including a computer program that, when executed by a processor, implements the uplink synchronization method of any of the embodiments of the present disclosure as shown in Figure 4 to Figure 14, or implements the uplink synchronization method of any of the embodiments of the present disclosure as shown in Figure 15.

In order to implement the above embodiments, the present disclosure further proposes in an embodiment a computer program including a computer program code that, when running on a computer, causes the computer to implement the uplink synchronization methods of any of the embodiments of the present disclosure as shown in Figure 4 to Figure 14, or to implement the uplink synchronization method of any of the embodiments of the present disclosure as shown in Figure 15.

It should be noted that the above explanation and illustration of the above described uplink synchronization method and apparatus embodiments are also applicable to the electronic device, the storage medium, the computer program product, and the computer program in the above embodiments, and will not be repeated herein.

Those skilled in the art should understand that the embodiments of the present disclosure may be provided as methods, systems, or computer program products. Accordingly, the present disclosure may take the form of a fully hardware embodiment, a fully software embodiment, or an embodiment that combines software and hardware aspects. Further, the present disclosure may take the form of a computer program product implemented on one or more computer-usable storage media (including, but not limited to, disk memory and optical memory, and the like) that contain computer-usable program code therein.

The present disclosure has been described with reference to flowcharts and/or block diagrams of methods, devices (systems), and computer program products according to embodiments of the present disclosure. It should be understood that each flow and/or box in the flowchart and/or block diagram, and the combination of flows and/or boxes in the flowchart and/or block diagram, may be implemented by computer-executable instructions. These computer-executable instructions may be provided to a general-purpose computer, a specialized computer, an embedded processor, or a processor of other programmable data-processing device to produce a machine, to cause instructions executed through a computer or a processor of other programmable data processing device to produce means for implementing a function specified in one or more flows of a flowchart and/or one or more boxes of a block diagram.

These processor-executable instructions may also be stored in processor-readable memory capable of directing a computer or other programmable data processing device to operate in a particular manner, to cause instructions stored in the processor-readable memory to produce an article of manufacture including an instruction apparatus, and the instruction apparatus implements a function specified in one or more flows of the flowchart and/or one or more boxes of the block diagram.

These processor-executable instructions may also be loaded onto a computer or other programmable data-processing device, enabling a series of operational steps to be executed on the computer or other programmable device to produce computer-implemented processing, so that instructions executed on the computer or other programmable device provide steps for implementing functions specified in one or more flows of the flowchart and/or one or more boxes of the block diagram.

Obviously, those skilled in the art can make various changes and variations to the present disclosure without departing from the spirit and scope of the present disclosure. Thus, to the extent that these modifications and variations of the present disclosure are within the scope of the claims of the present disclosure and their technical equivalents, the present disclosure is intended to encompass such modifications and variations as well.

All embodiments of the present disclosure may be executed alone or in combination with other embodiments and are considered to be within the scope of protection of the claims of the present disclosure.

**Claims**

1. An uplink synchronization method, performed by a terminal device, comprising:

sending an uplink reference signal to a network device of at least one candidate cell, wherein the uplink reference signal is configured by a network device of a serving cell where the terminal device is located, and is used to determine timing advance (TA) information by the network device of the at least one candidate cell; receiving TA indication information sent by the network device of the serving cell where the terminal device is located, wherein the TA indication information sent by the network device of the serving cell at least comprises: TA information of a target cell to be switched to by the terminal device among the at least one candidate cell; and performing uplink synchronization according to the TA information of the target cell, based on the network device of the serving cell instructing the terminal device to switch to the target cell.

2. The uplink synchronization method according to claim 1, wherein the uplink reference signal comprises at least one of:

a preamble signal; a sounding reference signal; a demodulation reference signal; and an uplink signal transmitted over the physical uplink control channel (PUCCH).

3. The uplink synchronization method according to claim 1 or 2, wherein the receiving TA indication information sent by the network device of the serving cell where the terminal device is located comprises:

receiving a first switching instruction sent by the network device of the serving cell where the terminal device is located, wherein the first switching instruction is used to instruct the terminal device to switch to the target cell among the at least one candidate cell, wherein the first switching instruction carries the TA indication information that comprises cell indication information of the target cell and the TA information of the target cell.

4. The uplink synchronization method according to claim 1 or 2, wherein the receiving TA indication information sent by the network device of the serving cell where the terminal device is located comprises:

receiving a first instruction message sent by the network device of the serving cell where the terminal device is located, wherein the first instruction message is used to instruct the terminal device to store or update the TA information of the at least one candidate cell; wherein the first instruction message carries the TA indication information that comprises cell indication information of the at least one candidate cell and the TA information of the at least one candidate cell.

5. The uplink synchronization method according to claim 1 or 2, wherein the receiving TA indication information sent by the network device of the serving cell where the terminal device is located comprises: receiving a random access message sent by the network device of the serving cell where the terminal device is located, wherein the random access message is sent from the network device of the at least one candidate cell to the network device of the serving cell, and carries the TA indication information, wherein the TA indication information comprises cell indication information of the at least one candidate cell and the TA information of the at least one candidate cell.

6. The uplink synchronization method according to claim 3, 4, or 5, wherein the cell indication information comprises at least one of:

an identity document (ID);
a transmission configuration indicator (TCI) status associated with the cell;
a control resource pool index associated with the cell;
an uplink channel associated with the cell; and
a cell index.

7. The uplink synchronization method according to claim 3, 4, or 5, wherein the TA information comprises a TA value or a TA group.

8. The uplink synchronization method according to claim 4, wherein the first instruction message is a MAC Control Element (MAC-CE) message or a Downlink Control Information (DCI) message.

9. The uplink synchronization method according to claim 4, wherein after receiving a first instruction message sent by the network device of the serving cell where the terminal device is located, the uplink synchronization method further comprises:

receiving a second switching instruction sent by the network device of the serving cell where the terminal device is located, wherein the second switching instruction is used to instruct the terminal device to switch to the target cell;
wherein the second switching instruction carries cell indication information of the target cell.

10. The uplink synchronization method according to claim 4, wherein the receiving a first instruction message sent by the network device of the serving cell comprises:

receiving the first instruction message periodically sent by the network device of the serving cell, wherein the first instruction message sent periodically is generated based on the TA information periodically determined by the network device of the at least one candidate cell;
the uplink synchronization method further comprises:
periodically updating the TA information of the at least one candidate cell based on the first instruction message received periodically.

11. The uplink synchronization method according to any one of claims 1 to 10, further comprising:

receiving a second instruction message sent by the network device of the serving cell, wherein the second instruction message is used to instruct multiple adjacent cells of the serving cell;
measuring the multiple adjacent cells according to the second instruction message, to obtain a measurement result parameter of the multiple adjacent cells;
sending the measurement result parameter of the multiple adjacent cells to the network device of the serving cell, wherein the measurement result parameter is used by the network device of the serving cell to determine the at least one candidate cell from the multiple adjacent cells; and
receiving a third instruction message sent by the network device of the serving cell, wherein the third instruction message is used to instruct the terminal device to send the uplink reference signal to the network device of the at least one candidate cell.

12. The uplink synchronization method according to claim 11, wherein

the third instruction message carries time-frequency domain resource configuration information of the uplink reference signal; and/or
the third instruction message carries power control parameter information of the uplink reference signal; and/or
the third instruction message carries configuration information of a transmission beam of the uplink reference signal.

13. The uplink synchronization method according to claim 12, wherein the power control parameter information comprises the number of transmissions of the uplink reference signal, that is either initial transmission or retransmission; and
the sending an uplink reference signal to a network device of at least one candidate cell comprises:

sending the uplink reference signal to the network device of the at least one candidate cell at a set power corresponding to the initial transmission, based on the power control parameter information being the initial transmission; and
sending the uplink reference signal to the network device of the at least one candidate cell at a transmission power determined by a transmission power of a previous uplink reference signal and set power increase information, based on the power control parameter information being the retransmission.

**14.** The uplink synchronization method according to claim 12, wherein the power control parameter information comprises power increase information; and

the sending an uplink reference signal to a network device of at least one candidate cell comprises: sending the uplink reference signal to the network device of the at least one candidate cell at a transmission power determined by a transmission power of a previous uplink reference signal and the power increase information.

**15.** The uplink synchronization method according to any one of claims 1 to 10, further comprising:

receiving a second instruction message sent by the network device of the serving cell, wherein the second instruction message is used to instruct multiple adjacent cells of the serving cell; measuring the multiple adjacent cells according to the second instruction message, to obtain a measurement result parameter of the multiple adjacent cells; and determining the at least one candidate cell from the multiple adjacent cells based on the measurement result parameter of the multiple adjacent cells.

**16.** The uplink synchronization method according to claim 11 or 15, wherein the at least one candidate cell is a cell whose measurement result parameter is higher than a set measurement result parameter and a difference between whose measurement result parameter and the set measurement result parameter is greater than or equal to a set offset, wherein the set measurement result parameter is determined based on the measurement result parameter of the serving cell.

**17.** The uplink synchronization method according to any one of claims 1 to 15, wherein the performing uplink synchronization according to the TA information of the target cell comprises: adjusting transmission time of the physical uplink shared channel (PUSCH) transmission using the TA information of the target cell based on a downlink reference timing of the terminal device.

**18.** An uplink synchronization method, performed by a network device of a serving cell where a terminal device is located, comprising:

receiving timing advance (TA) information sent by a network device of at least one candidate cell, wherein the TA information of the at least one candidate cell is determined based on an uplink reference signal sent by the terminal device; and

sending TA indication information to the terminal device based on the TA information of the at least one candidate cell, wherein the TA indication information sent to the terminal device at least comprises the TA information of a target cell to be switched to by the terminal device among the at least one candidate cell, and the TA information of the target cell is used by the terminal device to perform uplink synchronization based on the network device of the serving cell instructing the terminal device to switch to the target cell.

**19.** The uplink synchronization method according to claim 18, wherein the uplink reference signal comprises at least one of:

a preamble signal;
a sounding reference signal;
a demodulation reference signal; and
an uplink signal transmitted over the physical uplink control channel (PUCCH).

**20.** The uplink synchronization method according to claim 18 or 19, wherein the sending TA indication information to the terminal device based on the TA information of the at least one candidate cell comprises:

sending a first switching instruction to the terminal device based on the TA information of the target cell among the at least one candidate cell, wherein the first switching instruction is used to instruct the terminal device to switch to the target cell among the at least one candidate cell; wherein the first switching instruction carries the TA indication information that comprises cell indication information of the target cell and the TA information of the target cell.

**21.** The uplink synchronization method according to claim 18 or 19, wherein the sending TA indication information to the terminal device based on the TA information of the at least one candidate cell comprises:

sending a first instruction message to the terminal device based on the TA information of the at least one candidate cell, wherein the first instruction message is used to instruct the terminal device to store or update the TA information of the at least one candidate cell; wherein the first instruction message carries the TA indication information that comprises cell indication information of the at least one candidate cell and the TA information of the at least one candidate cell.

**22.** The uplink synchronization method according to claim 18 or 19, wherein the sending TA indication information to the terminal device based on the TA information of the at least one candidate cell comprises:
sending a random access message to the terminal device, wherein the random access message is sent from the network device of the at least one candidate cell to the network device of the serving cell and carries the TA indication information, wherein the TA indication information comprises cell indication information of the at least one candidate cell and the TA information of the at least one candidate cell.

**23.** The uplink synchronization method according to claim 20, 21, or 22, wherein the cell indication information comprises at least one of:

an identity document (ID);
a transmission configuration indicator (TCI) status associated with the cell;
a control resource pool index associated with the cell;
an uplink channel associated with the cell; and
a cell index.

**24.** The uplink synchronization method according to claim 20, 21, or 22, wherein the TA information comprises a TA value or a TA group.

**25.** The uplink synchronization method according to claim 21, wherein the first instruction message is a MAC Control Element (MAC-CE) message or a Downlink Control Information (DCI) message.

**26.** The uplink synchronization method according to claim 21, wherein after sending a first instruction message to the terminal device based on the TA information of the at least one candidate cell, the uplink synchronization method further comprises:

sending a second switching instruction to the terminal device,
wherein the second switching instruction is used to instruct the terminal device to switch to the target cell; and
the second switching instruction carries the cell indication information of the target cell.

**27.** The uplink synchronization method according to claim 21, wherein the sending a first instruction message to the terminal device based on the TA information of the at least one candidate cell comprises:
periodically sending the first instruction message to the terminal device based on the TA information periodically determined by the network device of the at least one candidate cell.

**28.** The uplink synchronization method according to any one of claims 18 to 27, further comprising:

sending a second instruction message to the terminal device, wherein the second instruction message is used to instruct the terminal device to measure multiple adjacent cells of the serving cell to obtain a measurement result parameter of the multiple adjacent cells;
receiving the measurement result parameter of the multiple adjacent cells sent by the terminal device;
determining the at least one candidate cell from the multiple adjacent cells based on the measurement result parameter; and
sending a third instruction message to the terminal device, wherein the third instruction message is used to instruct the terminal device to send the uplink reference signal to the network device of the at least one candidate cell.

**29.** The uplink synchronization method according to claim 28, wherein

the third instruction message carries time-frequency domain resource configuration information of the uplink reference signal; and/or
the third instruction message carries power control parameter information of the uplink reference signal; and/or
the third instruction message carries configuration information of a transmission beam of the uplink reference signal.

**30.** The uplink synchronization method according to claim 29, wherein the power control parameter information comprises the number of transmissions of the uplink reference signal, that is either initial transmission or retransmission;

the power control parameter information being the initial transmission indicates sending the uplink reference signal to the network device of the at least one candidate cell at a set power corresponding to the initial transmission;
the power control parameter information being the retransmission indicates sending the uplink reference signal to the network device of the at least one candidate cell at a transmission power determined by a transmission power of a previous uplink reference signal and set power increase information.

**31.** The uplink synchronization method according to claim 29, wherein the power control parameter information comprises power increase information; and
the uplink reference signal is sent to the network device of the at least one candidate cell at a transmission power determined by a transmission power of a previous uplink reference signal and the power increase information.

32. The uplink synchronization method according to any one of claims 18 to 27, further comprising:
sending a second instruction message to the terminal device, wherein the second instruction message is used to instruct the terminal device to measure multiple adjacent cells of the serving cell to obtain a measurement result parameter of the multiple adjacent cells, and to determine the at least one candidate cell from the multiple adjacent cells based on the measurement result parameter of the multiple adjacent cells.

33. The uplink synchronization method according to claim 28 or 32, wherein the at least one candidate cell is a cell whose measurement result parameter is higher than a set measurement result parameter and a difference between whose measurement result parameter and the set measurement result parameter is greater than or equal to a set offset, wherein the set measurement result parameter is determined based on the measurement result parameter of the serving cell.

34. A terminal device comprising a memory, a transceiver, and a processor, wherein
the memory is configured to store computer programs; the transceiver is configured to transmit and receive data under control of the processor; the processor is configured to read the computer programs from the memory and perform the following operations:

sending an uplink reference signal to a network device of at least one candidate cell, wherein the uplink reference signal is configured by a network device of a serving cell where the terminal device is located, and is used to determine timing advance (TA) information by the network device of the at least one candidate cell;
receiving TA indication information sent by the network device of the serving cell where the terminal device is located, wherein the TA indication information sent by the network device of the serving cell at least comprises: TA information of a target cell to be switched to by the terminal device among the at least one candidate cell; and
performing uplink synchronization according to the TA information of the target cell, based on the network device of the serving cell instructing the terminal device to switch to the target cell.

35. The terminal device according to claim 34, wherein the uplink reference signal comprises at least one of:

a preamble signal;
a sounding reference signal;
a demodulation reference signal; and
an uplink signal transmitted over the physical uplink control channel (PUCCH).

36. The terminal device according to claim 34 or 35, wherein the receiving TA indication information sent by the network device of the serving cell where the terminal device is located comprises:

receiving a first switching instruction sent by the network device of the serving cell where the terminal device is located, wherein the first switching instruction is used to instruct the terminal device to switch to the target cell among the at least one candidate cell,
wherein the first switching instruction carries the TA indication information that comprises cell indication information of the target cell and the TA information of the target cell.

37. A network device for a serving cell where a terminal device is located, comprising a memory, a transceiver, and a processor, wherein,
the memory is configured to store computer programs; the transceiver is configured to transmit and receive data under control of the processor; the processor is configured to read the computer programs from the memory and perform the following operations:

receiving timing advance (TA) information sent by a network device of at least one candidate cell, wherein the TA information of the at least one candidate cell is determined based on an uplink reference signal sent by the terminal device; and
sending TA indication information to the terminal device based on the TA information of the at least one candidate cell,
wherein the TA indication information sent to the terminal device at least comprises the TA information of a target cell to be switched to by the terminal device among the at least one candidate cell, and the TA information of the target cell is used by the terminal device to perform uplink synchronization based on the network device of the serving cell instructing the terminal device to switch to the target cell.

38. The network device according to claim 37, wherein the uplink reference signal comprises at least one of:

a preamble signal;
a sounding reference signal;

a demodulation reference signal; and
an uplink signal transmitted over the physical uplink control channel (PUCCH).

39. The network device according to claim 37 or 38, wherein the sending TA indication information to the terminal device based on the TA information of the at least one candidate cell comprises:

sending a first switching instruction to the terminal device based on the TA information of the target cell among the at least one candidate cell, wherein the first switching instruction is used to instruct the terminal device to switch to the target cell among the at least one candidate cell; the first switching instruction carries the TA indication information that comprises cell indication information of the target cell and the TA information of the target cell.

40. An uplink synchronization apparatus, comprising:

a sending unit, configured to send an uplink reference signal to a network device of at least one candidate cell, wherein the uplink reference signal is configured by a network device of a serving cell where the terminal device is located, and is used to determine timing advance (TA) information by the network device of the at least one candidate cell;
a receiving unit, configured to receive TA indication information sent by the network device of the serving cell where the terminal device is located, wherein the TA indication information sent by the network device of the serving cell at least comprises: TA information of a target cell to be switched to by the terminal device among the at least one candidate cell; and
a synchronization unit, configured to perform uplink synchronization according to the TA information of the target cell, based on the network device of the serving cell instructing the terminal device to switch to the target cell.

41. An uplink synchronization apparatus, comprising:

a receiving unit, configured to receive timing advance (TA) information sent by a network device of at least one candidate cell, wherein the TA information of the at least one candidate cell is determined based on an uplink reference signal sent by the terminal device; and
a sending unit, configured to send TA indication information to the terminal device based on the TA information of the at least one candidate cell, wherein the TA indication information sent to the terminal device at least comprises the TA information of a target cell to be switched to by the terminal device among the at least one candidate cell, and the TA information of the target cell is used by the terminal device to perform uplink synchronization based on the network device of the serving cell instructing the terminal device to switch to the target cell.

42. A processor-readable storage medium, wherein the processor-readable storage medium stores a computer program for causing a processor to perform the uplink synchronization method as claimed in any one of claims 1-17 or the uplink synchronization method as claimed in any one of claims 18-33.

43. A computer program product, wherein the computer program product comprises a computer program that, when executed by a processor, implements the uplink synchronization method as claimed in any one of claims 1-17 or the uplink synchronization method as claimed in any one of claims 18-33.

44. A computer program, wherein the computer program comprises a computer program code that, when executed on a computer, causes the computer to perform the uplink synchronization method as claimed in any one of claims 1-17 or the uplink synchronization method as claimed in any one of claims 18-33.

| R | TA indication information |
|---|---|

| TA indication information | physical control information |
|---|---|

| physical control information |
|---|

| physical control information |
|---|

| physical control information |
|---|

| Temporary Cell - Wireless Network Temporary Identifier |
|---|

| Temporary Cell - Wireless Network Temporary Identifier |
|---|

Figure 1

| downlink frame i |
|---|

| uplink frame i |
|---|

$$(N_{TA} + N_{TA,offset})T_C$$

Figure 2

| timing advance group Identifier | timing advance indication information |
|---|---|

Figure 3

```
┌─────────────────────────────────────────────────────────┐
│  sending an uplink reference signal to a network device  │ ─401
│  of at least one candidate cell                          │
└─────────────────────────────────────────────────────────┘
                            │
                            ▼
┌─────────────────────────────────────────────────────────┐
│  receiving TA indication information sent by the network │ ─402
│  device of the serving cell where the terminal device is │
│  located                                                 │
└─────────────────────────────────────────────────────────┘
                            │
                            ▼
┌─────────────────────────────────────────────────────────┐
│  performing uplink synchronization according to the TA   │ ─403
│  information of the target cell, based on the network     │
│  device of the serving cell instructing the terminal      │
│  device to switch to the target cell                      │
└─────────────────────────────────────────────────────────┘
```

Figure 4

```
┌─────────────────────────────────────────────────────────┐
│  sending an uplink reference signal to a network device  │ ─501
│  of at least one candidate cell                          │
└─────────────────────────────────────────────────────────┘
                            │
                            ▼
┌─────────────────────────────────────────────────────────┐
│  receiving a first switching instruction sent by the     │ ─502
│  network device of the serving cell where the terminal    │
│  device is located                                       │
└─────────────────────────────────────────────────────────┘
                            │
                            ▼
┌─────────────────────────────────────────────────────────┐
│  the first switching instruction carries the TA indication│ ─503
│  information that comprises cell indication information of  │
│  the target cell and the TA information of the target cell │
└─────────────────────────────────────────────────────────┘
                            │
                            ▼
┌─────────────────────────────────────────────────────────┐
│  performing uplink synchronization according to the TA   │ ─504
│  information of the target cell, based on the network     │
│  device of the serving cell instructing the terminal      │
│  device to switch to the target cell                      │
└─────────────────────────────────────────────────────────┘
```

Figure 5

| Indicator#1 | Indicator#2 | ······ | Indicator#M |
|-------------|-------------|--------|-------------|
| TA1#1 | TA1#2 | ······ | TA1#M |

Figure 6

sending an uplink reference signal to a network device of at least one candidate cell    ⌐701

receiving a random access message sent by the network device of the serving cell where the terminal device is located    ⌐702

performing uplink synchronization according to the TA information of the target cell, based on the network device of the serving cell instructing the terminal device to switch to the target cell    ⌐703

Figure 7

sending an uplink reference signal to a network device of at least one candidate cell    ⌐801

receiving a first instruction message sent by the network device of the serving cell where the terminal device is located    ⌐802

the first instruction message carries the TA indication information that comprises cell indication information of the at least one candidate cell and the TA information of the at least one candidate cell    ⌐803

performing uplink synchronization according to the TA information of the target cell, based on the network device of the serving cell instructing the terminal device to switch to the target cell    ⌐804

Figure 8

sending an uplink reference signal to a network device of at least one candidate cell ⌐901

receiving the first instruction message periodically sent by the network device of the serving cell ⌐902

periodically updating the TA information of the at least one candidate cell based on the first instruction message received periodically ⌐903

the first instruction message carries the TA indication information that comprises cell indication information of the at least one candidate cell and the TA information of the at least one candidate cell ⌐904

performing uplink synchronization according to the TA information of the target cell, based on the network device of the serving cell instructing the terminal device to switch to the target cell ⌐805

Figure 9

receiving a second instruction message sent by the network device of the serving cell ⌐1001

measuring the multiple adjacent cells according to the second instruction message, to obtain a measurement result parameter of the multiple adjacent cells ⌐1002

sending the measurement result parameter of the multiple adjacent cells to the network device of the serving cell ⌐1003

receiving a third instruction message sent by the network device of the serving cell ⌐1004

sending an uplink reference signal to a network device of at least one candidate cell ⌐1005

receiving TA indication information sent by the network device of the serving cell where the terminal device is located ⌐1006

performing uplink synchronization according to the TA information of the target cell, based on the network device of the serving cell instructing the terminal device to switch to the target cell ⌐1007

Figure 10

| receiving a second instruction message sent by the network device of the serving cell | 1101 |

↓

| measuring the multiple adjacent cells according to the second instruction message, to obtain a measurement result parameter of the multiple adjacent cells | 1102 |

↓

| determining the at least one candidate cell from the multiple adjacent cells based on the measurement result parameter of the multiple adjacent cells | 1103 |

↓

| sending an uplink reference signal to a network device of at least one candidate cell | 1104 |

↓

| receiving TA indication information sent by the network device of the serving cell where the terminal device is located | 1105 |

↓

| performing uplink synchronization according to the TA information of the target cell, based on the network device of the serving cell instructing the terminal device to switch to the target cell | 1106 |

Figure 11

| sending an uplink reference signal to a network device of at least one candidate cell | 1201 |

↓

| receiving TA indication information sent by the network device of the serving cell where the terminal device is located | 1202 |

↓

| adjusting transmission time of the physical uplink shared channel PUSCH transmission using the TA information of the target cell based on a downlink reference timing of the terminal device, in response to the network device of the serving cell instructing the terminal device to switch to the target cell | 1203 |

Figure 12

| 001 | 011 | 101 | 111 |
|-----|-----|-----|-----|
| TA1= 30 | TA3= 32 | TA5= 35 | TA7= 32 |

Figure 13

| Indicator1(000) | PCI1 |
|-----------------|------|
| Indicator3(011) | PCI3 |
| Indicator5(101) | PCI5 |
| Indicator7(111) | PCI7 |

Figure 14

receiving timing advance TA information sent by a network device of at least one candidate cell ⌐1501

sending TA indication information to the terminal device based on the TA information of the at least one candidate cell ⌐1502

Figure 15

processor ⟵ 1620

user interface

1630
memory

transceiver ⟵ 1610

bus interface ⟵ 1640

Figure 16

processor ⟵ 1720

bus interface

1730
memory

transceiver ⟵ 1710

Figure 17

1800

uplink synchronization apparatus

sending unit ⟵ 1810

receiving unit ⟵ 1820

synchronization unit ⟵ 1830

Figure 18

1900

uplink synchronization apparatus

receiving unit ⟵ 1910

sending unit ⟵ 1920

Figure 19

## INTERNATIONAL SEARCH REPORT

| | International application No. |
|---|---|
| | **PCT/CN2023/095602** |

| A. | CLASSIFICATION OF SUBJECT MATTER |
|---|---|

H04W36/00(2009.01)i

According to International Patent Classification (IPC) or to both national classification and IPC

| B. | FIELDS SEARCHED |
|---|---|

Minimum documentation searched (classification system followed by classification symbols)

IPC:H04W,H04L,H04B

Documentation searched other than minimum documentation to the extent that such documents are included in the fields searched

Electronic data base consulted during the international search (name of data base and, where practicable, search terms used)

CNTXT, CNKI, VEN, USTXT, EPTXT, WOTXT, JPTXT, 3GPP: 上行同步, UL, synchronization, 源小区, 服务小区, 邻小区, 邻居, 候选, 备选, 时间提前, TA, source, serving, neighbor, candidate, alternate, time advance, 参考信号, SRS, 提前, 预先, advance

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 107770824 A (HUAWEI TECHNOLOGIES CO., LTD.) 06 March 2018 (2018-03-06) description, paragraphs [0181]-[0323] and [0486]-[0493], and figure 5 | 1-44 |
| X | CN 101932052 A (HUAWEI TECHNOLOGIES CO., LTD.) 29 December 2010 (2010-12-29) description, paragraphs [0038]-[0053] | 1-44 |
| A | CN 113518417 A (HUAWEI TECHNOLOGIES CO., LTD.) 19 October 2021 (2021-10-19) entire document | 1-44 |
| A | CN 112312487 A (HUAWEI TECHNOLOGIES CO., LTD.) 02 February 2021 (2021-02-02) entire document | 1-44 |
| A | CN 106550415 A (ZTE CORP.) 29 March 2017 (2017-03-29) entire document | 1-44 |
| A | US 2020351728 A1 (INSTITUTE FOR INFORMATION INDUSTRY) 05 November 2020 (2020-11-05) entire document | 1-44 |

☑ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 August 2023** | **10 August 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2023/095602** |

**C.    DOCUMENTS CONSIDERED TO BE RELEVANT**

| Category* | Citation of document, with indication, where appropriate, of the relevant passages | Relevant to claim No. |
|---|---|---|
| A | US 2019281569 A1 (GOLDPEAK INNOVATIONS INC.) 12 September 2019 (2019-09-12) entire document | 1-44 |

Form PCT/ISA/210 (second sheet) (July 2022)

**INTERNATIONAL SEARCH REPORT**
Information on patent family members

International application No.

**PCT/CN2023/095602**

| Patent document cited in search report | | | Publication date (day/month/year) | Patent family member(s) | | | Publication date (day/month/year) |
|---|---|---|---|---|---|---|---|
| CN | 107770824 | A | 06 March 2018 | WO | 2018033136 | A1 | 22 February 2018 |
| CN | 101932052 | A | 29 December 2010 | WO | 2010149035 | A1 | 29 December 2010 |
| | | | | US | 2012093128 | A1 | 19 April 2012 |
| | | | | US | 9008040 | B2 | 14 April 2015 |
| | | | | EP | 2448329 | A1 | 02 May 2012 |
| | | | | EP | 2448329 | A4 | 08 August 2012 |
| | | | | EP | 2448329 | B1 | 08 October 2014 |
| | | | | RU | 2012102000 | A | 27 August 2013 |
| | | | | RU | 2496265 | C2 | 20 October 2013 |
| | | | | BRPI | 1012261 | A2 | 05 April 2016 |
| | | | | BRPI | 1012261 | B1 | 30 March 2021 |
| | | | | BRPI | 1012261 | B8 | 30 August 2022 |
| | | | | JP | 2012531141 | A | 06 December 2012 |
| | | | | JP | 5373968 | B2 | 18 December 2013 |
| CN | 113518417 | A | 19 October 2021 | | None | | |
| CN | 112312487 | A | 02 February 2021 | | None | | |
| CN | 106550415 | A | 29 March 2017 | WO | 2017050010 | A1 | 30 March 2017 |
| US | 2020351728 | A1 | 05 November 2020 | TW | 202137797 | A | 01 October 2021 |
| | | | | TWI | 747354 | B | 21 November 2021 |
| | | | | US | 11503515 | B2 | 15 November 2022 |
| US | 2019281569 | A1 | 12 September 2019 | US | 2021368464 | A1 | 25 November 2021 |
| | | | | US | 11690029 | B2 | 27 June 2023 |
| | | | | US | 10582460 | B2 | 03 March 2020 |
| | | | | US | 2015163761 | A1 | 11 June 2015 |
| | | | | US | 9516614 | B2 | 06 December 2016 |
| | | | | WO | 2013141663 | A1 | 26 September 2013 |
| | | | | US | 2020205103 | A1 | 25 June 2020 |
| | | | | US | 11082932 | B2 | 03 August 2021 |
| | | | | US | 2018317187 | A1 | 01 November 2018 |
| | | | | US | 2017048813 | A1 | 16 February 2017 |
| | | | | US | 9769776 | B2 | 19 September 2017 |
| | | | | KR | 20130107984 | A | 02 October 2013 |
| | | | | KR | 101885540 | B1 | 11 September 2018 |
| | | | | US | 2013250911 | A1 | 26 September 2013 |
| | | | | US | 8964645 | B2 | 24 February 2015 |
| | | | | US | 2018007646 | A1 | 04 January 2018 |
| | | | | US | 10015759 | B2 | 03 July 2018 |

Form PCT/ISA/210 (patent family annex) (July 2022)

**REFERENCES CITED IN THE DESCRIPTION**

**Patent documents cited in the description**

- CN 2022106009216
- CN 2023082253 W